(19) **Europäisches Patentamt**

**European Patent Office**

**Office européen des brevets**

(11) **EP 0 895 345 B1**

(12) **EUROPÄISCHE PATENTSCHRIFT**

| | |
|---|---|
| (45) Veröffentlichungstag und Bekanntmachung des Hinweises auf die Patenterteilung:<br>**03.03.2004 Patentblatt 2004/10** | (51) Int Cl.⁷: **H02P 6/14** |

(21) Anmeldenummer: **98117631.6**

(22) Anmeldetag: **21.11.1994**

(54) **Verfahren zur Überwachung eines kollektorlosen Gleichstrommotors, und Motor zur Durchführung eines solchen Verfahrens**

Method for monitoring a collectorless dc motor and motor for performing such a method

Méthode pour surveiller un moteur à courant continu sans collecteur et moteur pour la mise en oeuvre d'une telle méthode

(84) Benannte Vertragsstaaten:
**AT CH DE FR GB LI**

(30) Priorität: **28.11.1993 DE 4340248**

(43) Veröffentlichungstag der Anmeldung:
**03.02.1999 Patentblatt 1999/05**

(62) Dokumentnummer(n) der früheren Anmeldung(en) nach Art. 76 EPÜ:
**94118283.4 / 0 657 989**

(73) Patentinhaber: **PAPST-MOTOREN GmbH & Co. KG**
**78106 St Georgen (DE)**

(72) Erfinder:
- **Jeske, Frank Dipl.-Ing.**
  **78112 St. Georgen (DE)**
- **Karwath, Arno Dipl.-Ing.**
  **78628 Rottweil (DE)**
- **Rappenecker, Hermann Dipl.-Ing.**
  **78147 Vöhrenbach (DE)**

(56) Entgegenhaltungen:
| | |
|---|---|
| **EP-A- 0 084 156** | **EP-A- 0 425 479** |
| **EP-A- 0 466 673** | **DE-A- 3 342 986** |
| **DE-C- 3 710 509** | **GB-A- 2 247 999** |
| **US-A- 4 743 815** | **US-A- 5 017 846** |

EP 0 895 345 B1

**Beschreibung**

Die Erfindung betrifft ein Verfahren zur Überwachung eines kollektorlosen Gleichstrommotors, und einen Motor zur Durchführung eines solchen Verfahrens.

In vielen Fällen ist es erwünscht, einen kollektorlosen Gleichstrommotor darauf zu überwachen, ob er sich mit einer ausreichend hohen Drehzahl dreht. Dies gilt z. B. bei Motoren, welche einen Lüfter antreiben. Wird ein solcher Motor blockiert, so können die elektronischen Geräte, welche vom Lüfter gekühlt werden, hohe Temperaturen annehmen oder sogar zerstört werden.

Aus der GB-A-2 247 999 kennt man eine Drehzahlüberwachung für einen Lüfter. Diese Schaltung verwendet zur Überwachung den impulsförmigen Motorstrom dieses Lüfters. Dieser Strom wird über einen Messwiderstand in eine Messspannung umgesetzt und in der Schaltung verarbeitet. Diese Messspannung hat immer vor dem Abschalten des Stromes in einem Strang einen Peak, und dieser erzeugt Rechteckimpulse am Ausgang eines Operationsverstärkers. Diese Impulse bewirken bei jeder Umdrehung des Motors die Entladung eines Kondensators über eine dazu vorgesehene Diode, und eine anschließende Ladung des Kondensators über einen Widerstand. Die impulsförmige Spannung an diesem Kondensator steuert einen Komparator, sofern ihre Amplitude groß genug wird, was bei niedrigen Drehzahlen der Fall ist. Dies bewirkt dann die Erzeugung eines Alarmsignals an einer LED.

Wird der Motor zu langsam, so wird also der genannte Kondensator auf eine zu hohe Spannung aufgeladen, so dass der Ausgang des Komparators hoch wird und z.B. eine LED aufleuchtet oder ein anderes Warnsignal ausgelöst wird, welches anzeigt, dass der Lüfter zu langsam läuft oder im Stillstand ist. - Wegen ihrer vielen Teile ist diese Schaltung aufwendig und muss auch - wegen der unterschiedlichen Form der Motorströme - an jeden Motortyp einzeln angepasst werden. Sofern der Motorstrom gleichmäßig ist, wie das bei mehrphasigen Motoren der Fall ist, kann diese Schaltung überhaupt nicht angewendet werden.

Aus der EP-A2, 0425479 kennt man einen kollektorlosen Gleichstrommotor, dessen Drehzahl abhängig vom der Temperatur so gesteuert wird, dass sie mit steigender Temperatur ansteigt bzw. mit fallender Temperatur sinkt. Hierzu wird ein Kondensator ständig über einen temperaturabhängigen Widerstand (Thermistor) aufgeladen, und dieser Kondensator wird bei jedem Kommutierungswechsel über einen Komparator entladen. Die Spannung an diesem Kondensator entspricht folglich einer Verknüpfung von Drehzahl und Temperatur. Diese Spannung wird mit einem konstanten Signal verglichen. Als Resultat des Vergleichs erhält man eine sägezahnförmige Spannung, welche die Energiezufuhr zum Motor steuert. Dieselbe Schrift zeigt auch bei einer anderen Motorvariante die Erzeugung einer drehzahlabhängigen Spannung mittels Dioden, die an zwei Phasen eines kollektorlosen Motors angeschlossen sind. Diese drehzahlabhängige analoge Spannung wird mit einer vorgegebenen Spannung verglichen, und wenn die drehzahlabhängige Spannung - als Folge einer niedrigen Drehzahl - zu niedrig wird, wird ein Alarmsignal erzeugt.

Es ist deshalb eine Aufgabe der Erfindung, ein neues Verfahren zur Überwachung eines kollektorlosen Gleichstrommotors, und einen entsprechenden Motor, bereitzustellen.

Nach der Erfindung wird diese Aufgabe gelöst durch ein Verfahren zur Überwachung eines kollektorlosen Gleichstrommotors, mit folgenden Schritten:

a) Bei der Bestromung eines vorgegebenen Stranges wird die Zeitdauer der Kommutierungsphase etwa ab der Kommutierung zu Beginn dieser Kommutierungsphase bis etwa zur Kommutierung am Ende dieser Kommutierungsphase fortlaufend als digitaler Wert erfasst;
b) diese Zeitdauer wird mit einem vorgegebenen Schwellenwert verglichen;
c) überschreitet diese Zeitdauer den Schwellenwert, so wird, ggf. unter Berücksichtigung zusätzlicher Parameter, ein Alarmsignal gesetzt.

Mittels dieses Verfahrens kann also in einfacher Weise erkannt werden, ob ein Motor blockiert ist oder zu langsam rotiert, und man kann dann den Motor automatisch abschalten und ein Alarmsignal erzeugen. Dieses Verfahren ist sehr genau und funktioniert unabhängig von der Form des Motorstroms und unabhängig von der Temperatur.

Eine andere Lösung der gestellten Aufgabe ergibt sich durch ein Verfahren zur Beeinflussung der Drehzahl eines kollektorlosen Gleichstrommotors, mit folgenden Merkmalen:

a) Bei der Bestromung eines vorgegebenen Stranges wird die Zeitdauer der Kommutierungsphase etwa ab der Kommutierung zu Beginn dieser Kommutierungsphase bis etwa zur Kommutierung am Ende dieser Kommutierungsphase fortlaufend als digitaler Wert erfasst;
b) diese Zeitdauer wird mit einem vorgegebenen Schwellenwert verglichen;
c) überschreitet diese Zeitdauer den Schwellenwert, so wird der Motor stromlos gemacht. Hierdurch wird erreicht, dass der Motor nicht überhitzt werden kann, wenn er stark gebremst oder sogar blockiert wird, da er dann automatisch nach Überschreiten des vorgegebenen Schwellenwerts stromlos gemacht wird.

In vielen Fällen ist ein Motor nicht dauernd blockiert, so dass er nach einiger Zeit wieder anlaufen könnte. Eine besonders bevorzugte Version des erfindungsgemäßen Verfahrens zur Berücksichtigung dieses Umstands ist Gegenstand des Patentanspruchs 4.

Die Erfindung betrifft auch einen kollektorlosen Gleichstrommotor mit einer Anordnung zur Überwachung seiner Drehzahl darauf, ob diese Drehzahl im Betrieb einen unteren Grenzwert unterschreitet, mit folgenden Merkmalen:

a) Es ist eine Vorrichtung vorgesehen, welche die Zeitdauer einer Kommutierungsphase etwa ab der Kommutierung zu Beginn dieser Kommutierungsphase bis etwa zur Kommutierung am Ende dieser Kommutierungsphase fortlaufend als digitalen Wert erfasst;
b) es ist eine Vorrichtung zum Vergleich dieser Zeitdauer mit einem vorgegebenen Schwellenwert vorgesehen;
c) es ist eine Vorrichtung vorgesehen, welche ein Alarmsignal erzeugt, wenn diese Zeitdauer den Schwellenwert überschreitet. Ein solcher Motor hat einen sehr einfachen Aufbau bei sicherer Funktion.

In weiterer Ausgestaltungen dieses Motors wird bei einem solchen Motor ein Zähler zur Erfassung der Zeitdauer einer Kommutierungsphase vorgesehen.

In bevorzugter Weise ist dieser Zähler Bestandteil eines Mikroprozessors oder Mikrocontrollers, der zur Steuerung der Kommutierung des Motors dient.

Auch hat in bevorzugter Weise der Rotormagnet des Rotors eine trapezförmige Magnetisierung,weil sich hierdurch ein günstiger Wirkungsgrad und eine Geräuschminderung ergeben.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen.

Es zeigt :

Fig. 1 ein Prinzipschaltbild einer bevorzugten Ausführungsform eines erfindungsgemäßen kollektorlosen Gleichstrommotors,

Fig. 2 ein Schaubild, welches den Verlauf der Drehzahl über der Temperatur zeigt, welcher Verlauf bei einem temperaturgeführten Lüfter angestrebt wird,

Fig. 3 eine Darstellung der Statorströme beim Motor nach Fig. 1 und bei maximaler Drehzahl, und mit der bevorzugten Stromabschaltung in einem Abstand D vor Erreichen der Kommutierungszeitpunkte ta bzw. tb,

Fig. 4 eine Variante zu einer Einzelheit der Fig. 1,

Fig. 5 eine Darstellung von Einzelheiten eines beim bevorzugten Ausführungsbeispiel verwendeten Mikroprozessors,

Fig. 6 eine Darstellung von Kurvenverläufen für den Fall, daß der Motor mit einer Drehzahl läuft, die kleiner ist als die gewünschte Drehzahl,

Fig. 7 eine Darstellung analog Fig. 6 und für den Fall, daß der Motor mit der gewünschten Drehzahl ("Soll-Drehzahl") läuft,

Fig. 8 eine Darstellung analog Fig. 6 und 7 für den Fall, daß der Motor zu schnell läuft,

Fig. 9 eine Darstellung analog den Fig. 6 bis 8 für den Fall, daß der Motor mit der zulässigen Minimaldrehzahl läuft,

Fig. 10 eine Darstellung analog Fig. 6 bis 9 für den Fall, daß der Temperatursensor defekt oder seine Anschlußleitung unterbrochen ist,

Fig. 11 eine synoptische Darstellung des Signals $U_{dif}$ für verschiedene Fälle, wobei jeweils n die aktuelle Drehzahl und n* die gewünschte Drehzahl ist,

Fig. 12 eine Darstellung, welche zeigt, wie abhängig von der Drehstellung des Rotors verschiedene Rechenvorgänge ("Routinen") vom Mikroprozessor abgearbeitet werden, und zwar für den Fall, daß die Drehzahl zu niedrig ist,

Fig. 13 eine Darstellung analog Fig. 12 für den Fall, daß die Drehzahl zu hoch ist,

Fig. 14 eine Darstellung des Schaltbilds eines bevorzugten Ausführungsbeispiels mit verschiedenen vorteilhaften Einzelheiten,

Fig. 15 ein Flußdiagramm von bei der Initialisierung des Mikroprozessors ablaufenden Vorgängen,

Fig. 16 eine Routine zur lmplementierung von Fig. 13,

Fig. 17 eine Routine zur Implementierung von Fig. 12,

Fig. 18 eine Routine, welche sich jeweils an die Routinen der Fig. 16 und 17 anschließt,

Fig. 19 eine Routine zur Berechnung einer Stellgröße PI für die Drehzahlregelung, oder für die Steuerung der Motordrehzahl,

Fig. 20 eine Rounine zur Berechnung eines Alarmsignals,

Fig. 21 Schaubilder zur Erläuterung der Flußdiagramme nach den Fig. 15 bis 19,

Fig. 22     ein Flußdiagramm analog Fig. 16, aber mit eingezeichneten NOP-Befehlen,

Fig. 23     ein Flußdiagramm analog Fig. 17, aber mit eingezeichneten NOP-Befehlen,

Fig. 24     ein Diagramm analog Fig. 12 zur Veranschaulichung der Vorgänge, die bei aufeinanderfolgenden Kommutierungsphasen ablaufen, und

Fig. 25     ein Schaltbild analog Fig. 1 für den Fall, daß der Motor nur mit seiner maximalen Drehzahl betrieben werden soll, also ohne Drehzahlregelung, wobei aber die Alarmfunktion, die Blockiersicherung, und das leistungslose Ein- und Ausschalten ebenso wie bei Fig. 1 arbeiten, d.h. der Programmablauf bleibt für diesen Fall gegenüber Fig. 1 unverändert.

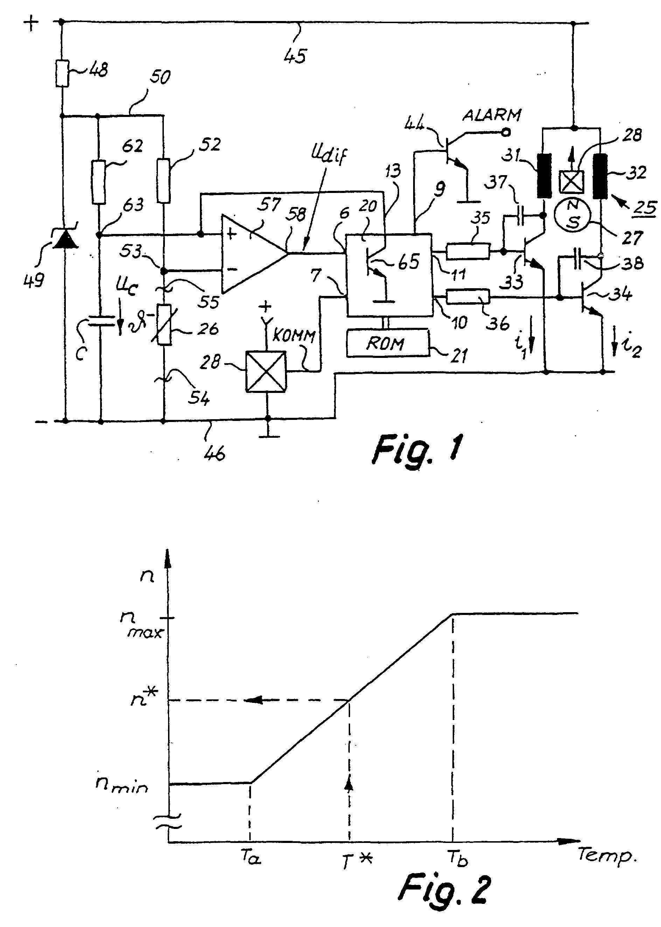

Fig. 1 zeigt das Grundprinzip der Erfindung in einer stark abstrahierten Darstellung. Mit 20 ist ein Mikroprozessor bezeichnet, dem ein ROM 21 zugeordnet ist, in dem für den Betrieb eines Motors 25 notwendige Befehle gespeichert sind. Diese Befehle, bzw. die von ihnen gesteuerten Operationen, werden nachfolgend anhand von Flußdiagrammen erläutert werden.

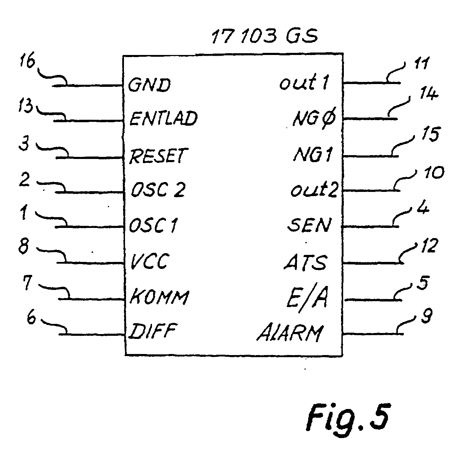

Fig. 5 zeigt die Anschlüsse eines Mikroprozessors vom Typ 17103GS, wie er bei der vorliegenden Erfindung verwendet werden kann. Dieser Mikroprozessor 20 enthält ein ROM mit einer Speicherkapazität von 512 Worten zu je 16 Bits. Deshalb ist dieses ROM hier nicht separat dargestellt. Die Anschlüsse und die Bezugzeichen für diesen Mikroprozessor sind Fig. 5 direkt zu entnehmen und werden deshalb nicht zusätzlich beschrieben. Diese Bezugszeichen gemäß Fig. 5 werden auch in Fig. 1 verwendet, so daß zu ihrer Erläuterung auf Fig. 5 hingewiesen werden kann. Dies gilt auch für die Bezeichnung der einzelnen Ports. Dei Bezugszeichen beziehen sich auf den Typ 17103GS, einen üblichen Mikroprozessor mit vier Bit Datenbreite.

Die Anordnung nach Fig. 1 dient dazu, einen Motor 25 temperaturabhängig so zu steuern bzw. zu regeln, daß dieser Motor bei niedrigen Temperaturen mit niedriger Drehzahl n läuft, bei hohen Temperaturen dagegen mit hoher Drehzahl. Eine bekannte Anwendung eines solchen Motors ist der Antrieb eines Gerätelüfters. Fig. 2 zeigt einen bevorzugten Verlauf der Drehzahl über der Temperatur; dieser Verlauf bedarf keiner zusätzlichen Erläuterung. Die Motordrehzahl n wird hierbei nach unten hin auf einen Wert $n_{min}$ begrenzt, z. B. auf den Wert $n_{min}$, und nach oben auf den Wert $n_{max}$, d.h. sie kann z.B. zwischen 1400 und 2800 U/min liegen, wenn es sich um einen Gerätelüfter handelt.

Oberhalb von 50 °C wird gewöhnlich die maximale Drehzahl verlangt, wobei es sich um die höchste mögliche Drehzahl des Motors 25 handelt, die gewöhnlich nicht geregelt wird, aber im Rahmen der Erfindung auch geregelt werden könnte. Naturgemäß kann die Anordnung nach Fig. 1 auch zur Regelung einer konstanten Drehzahl verwendet werden. Hierzu muß nur der NTC-Widerstand 26 durch einen konstanten Widerstand ersetzt werden.

Fällt die Drehzahl des Motors 25 weit unter den unteren Grenzwert, z. B. durch einen Lagerschaden des Motors, so wird gewünscht, daß die Anordnung ein Alarmsignal abgibt, damit keine Schäden durch Überhitzung entstehen können, wenn der Motor einen Lüfter antreibt und folglich dieser Lüfter zu wenig Luft fördert. Auch wird gewünscht, daß ein solcher Motor bei Schäden an seinem Temperatursensor 26, der hier als NTC-Widerstand ausgebildet ist, automatisch mit der Drehzahl $n_{max}$ läuft. Dies gilt z. B., wenn die Leitungsverbindung zum Temperatursensor 26 unterbrochen ist, was bei der dargestellten Anordnung an sich ein Signal für eine sehr niedrige Drehzahl bedeutet, der nach der Logik der verwendeten Regelanordnung die Drehzahl $n_{min}$ entsprechen müßte. Diesem Signal entspricht bei der vorliegenden Erfindung die Drehzahl $n_{max}$. Ferner wird oft gewünscht, daß der Motorstrom unterbrochen wird, wenn der Motor blockiert ist, was man auch als "Blockiersicherung" bezeichnet.

Der Motor 25 hat bevorzugt einen permanentmagnetischen Rotor 27, welcher einen Rotorstellungssensor 28 steuert, z. B. einen Hall-IC.

Dieser ist in Fig. 1 zweimal dargestellt, um das Verständnis zu erleichtern. Sein Ausgangssignal KOMM wird dem entsprechenden Eingang (Port) 7 des Mikroprozessors 20 zugeführt. Dieses Signal KOMM steuert die Kommutierung der Ströme $i_1$ und $i_2$ in zwei Statorwicklungssträngen 31 bzw. 32 des Motors 25.

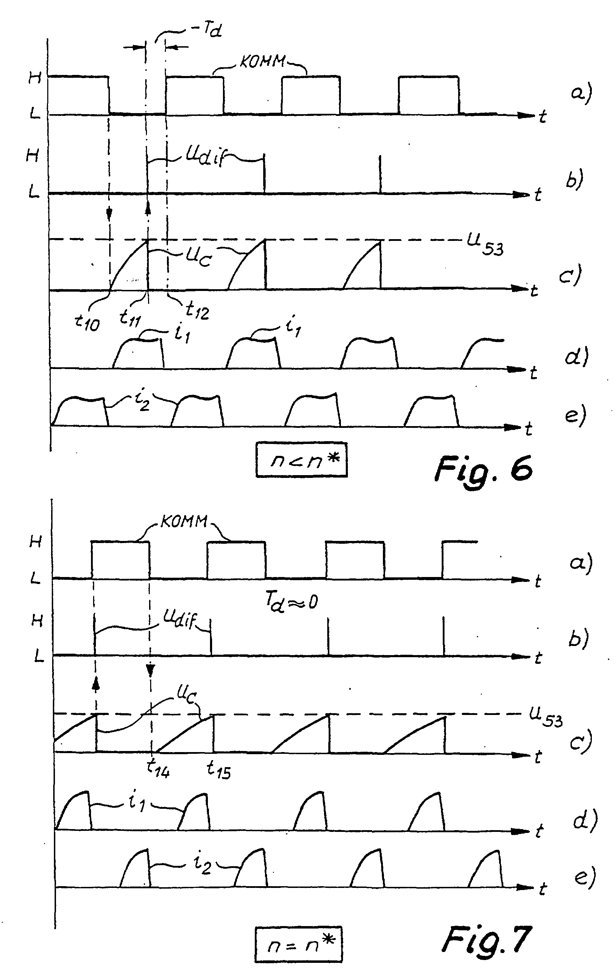

Wie die Fig. 6 und 7 beispielhaft zeigen, bewirkt z.B. ein niedriges Rotorstellungssignal (KOMM = L), daß nur der Strang 31 eingeschaltet werden kann (Strom $i_1$), und ein hohes Rotorstellungssignal (KOMM = H) bewirkt, daß nur der Strang 32 eingeschaltet werden kann (Strom $i_2$). Die Einschaltdauer dieser Ströme $i_1$ und $i_2$ hängt von der Temperatur am Temperatursensor 26 und von der Belastung des Motors 25 ab, wie das nachfolgend beschrieben wird.

Zur Steuerung der Ströme $i_1$ bzw. $i_2$ dienen, wie dargestellt, zwei npn-Leistungstransistoren 33, 34. Ihre Basen sind jeweils über einen Widerstand 35 bzw. 36 mit den Ausgängen (Port) 9 bzw. 10 des Mikroprozessors 20 verbunden, welche im Betrieb die Treibersignale out1 bzw. out2 abgeben. Ferner ist jeweils zwischen Kollektor und Basis der Transistoren 33, 34 ein Kondensator 37 bzw. 38 geschaltet, der zusammen mit dem betreffenden Widerstand 35 bzw. 36 als Verzögerungsglied bei der Abschaltung des betreffenden Transistors 33 oder 34 dient.

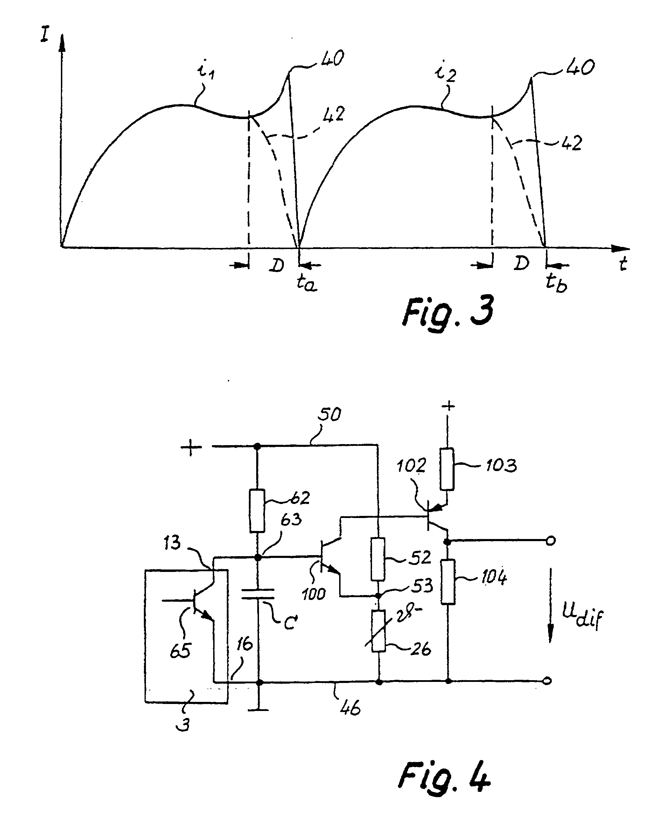

Hierzu wird auf Fig. 3 verwiesen, welche die Ströme $i_1$ und $i_2$ bei Vollast zeigt, also bei maximaler Drehzahl.

In Fig. 3 sind die Kommutierungszeitpunkte mit $t_a$ und $t_b$ bezeichnet. Wird der Strom $i_1$ erst kurz vor dem Kommutierungszeitpunkt $t_a$ abgeschaltet und kein Kondensator 37 verwendet, so ergibt sich eine Abschalt-Stromspitze 40, und der Motor erzeugt starke Geräusche.

Wird dagegen der Strom $i_1$ zu einem Zeitpunkt abgeschaltet, der um die - übertrieben dargestellte - Zeitspanne D vor dem Kommutierungszeitpunkt $t_a$ liegt, und die RC-Kombination 35, 37 wird verwendet, so ergibt sich der gestrichelt dargestellte Stromverlauf 42, und der Motor 25 läuft wesentlich leiser. Dasselbe gilt - wegen der Symmetrie der Schaltung - für den Strom $i_2$. Beide Maßnahmen werden erfindungsgemäß in bevorzugter Weise kombiniert, um einen leisen Lauf des Motors 25 zu erreichen.

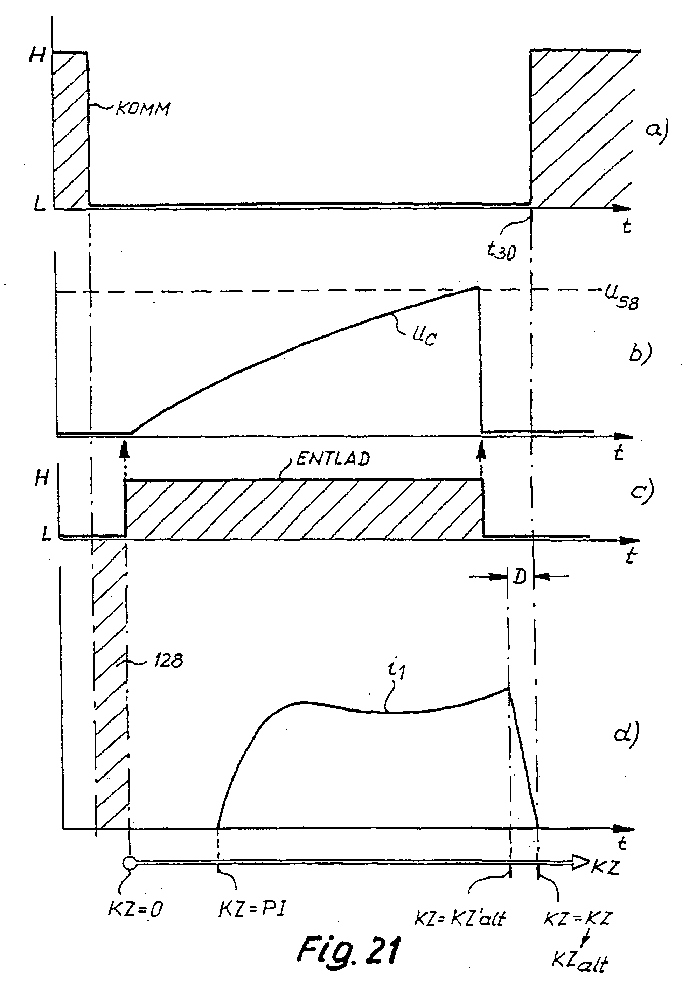

Der Abstand D kann in gleicher Weise durch den Regler drehzahlabhängig verändert werden, wie das nachfolgend für den Wert PI (z.B. Fig. 21 d) detailliert beschrieben wird. Hierzu kann man z.B. die Hälfte des berechneten Wertes PI zur Verzögerung vor dem Einschalten des Stromes verwenden, und die andere Hälfte zum verfrühten Ausschalten, als variablen Wert D. Dies optimiert den Motor und reduziert seine Laufgeräusche noch stärker, und eignet sich daher besonders für Motoren mit einer eher sinusförmigen Magnetisierung des Rotors 27. Der Rotor 27 hat bevorzugt eine trapezförmige Magnetisierung mit engen Lücken zwischen den Magnetpolen, um eine entsprechende trapezförmige Gegen-EMK zu erhalten. (Die Gegen-EMK wird auch als die induzierte Spannung bezeichnet.) Diese Maßnahme verbessert den Wirkungsgrad und bewirkt ebenfalls eine Geräuschminderung. Die Ströme $i_1$, $i_2$ gemäß Fig. 3 sind bei einem Motor mit einer solchen Magnetisierung des Rotors 27 gemessen. (Eine solche trapezförmige Magnetisierung mit engen Pollücken wird gelegentlich auch im Jargon des Elektromaschinenbaus als "rechteckförmige Magnetisierung" bezeichnet.)

Zur Erläuterung einer bevorzugten Motorkonstruktion für die dargestellte Bauweise mit zwei Strängen 31, 32 kann z.B. auf die DE 23 46 380 C2 verwiesen werden, oder auf Motoren mit ebenem Luftspalt gemäß der DE 22 25 442 C3. Es handelt sich um zweipulsige Motoren gemäß der Definition in asr-digest für angewandte Antriebstechnik, 1977, Seiten 27 bis 31. Diese Motoren können im Rahmen der Erfindung auch einsträngig ausgebildet sein, wobei dann zur Ansteuerung des einzigen Stranges eine Brückenschaltung erforderlich ist, vgl. die erwähnte Literaturstelle asr.

In gleicher Weise läßt sich die Erfindung auch bei kollektorlosen Motoren anderer Bauarten verwenden, z.B. bei dreisträngigen, dreipulsigen Motoren, um nur ein Beispiel zu nennen. Die dargestellte Anordnung mit einem zweipulsigen, zweisträngigen Motor ist aber besonders einfach und vorteilhaft, da sie ein Minimum an Bauelementen erfordert. Dies gilt besonders für Lüfter oder analoge Anwendungen, z.B. Scanner in Laserdruckern.

An den Alarm-Ausgang 9 des Mikoprozessors 20 ist ein npn-Transistor 44 angeschlossen, an dessen Kollektor z.B. eine Klingel oder eine Warnlampe angeschlossen werden kann, um ein hörbares oder ein visuelles Alarmsignal abzugeben, wenn die Drehzahl n (Fig. 3) zu niedrig wird. Häufig wird dieses Signal auch von einem Anwender intern weiterverarbeitet, z.B. in dem betreffenden Gerät.

Wie Fig. 2 zeigt, soll in einem Temperaturbereich zwischen Ta (z.B. 20° C) und Tb (z.B. 50° C) die Drehzahl mit steigender Temperatur ansteigen, d.h. ein bestimmter Temperaturwert T* soll in diesem Bereich eine bestimmte Drehzahl n* bewirken. Die Temperatur T* wirkt also hier wie ein Drehzahl-Sollwert für die Drehzahl n*, und es handelt sich folglich hier um eine Drehzahlregelung.

Hierfür muß eine Differenz gebildet werden zwischen dieser gewünschten Drehzahl n*, die man auch als Soll-Drehzahl bezeichnet, und der tatsächlichen Drehzahl, die man auch als Ist-Drehzahl bezeichnet. Diese Differenz bezeichnet man auch als Regelabweichung.

Bei einem digitalen Drehzahlregler wird die Regelabweichung meist digital berechnet, was teuer ist und relativ viel Zeit erfordert. Bei der vorliegenden Erfindung wird die Regelabweichung in bevorzugter Weise analog berechnet, und dies erlaubt es, während ihrer Berechnung bereits Rechenschritte für den Regelvorgang ablaufen zu lassen und diesen dadurch erheblich zu beschleunigen. Außerdem gestattet es die Erfindung, einen Mikroprozessor mit geringer Datenbreite zu verwenden, da die digitalen Rechenvorgänge keine Zähler mit großer Rechenkapazität erfordern. Dies ist ein wichtiger Vorteil der vorliegenden Erfindung.

Die in Fig. 1 dargestellte Anordnung hat eine positive Leitung 45 und eine negative Leitung 46, zwischen denen z.B. eine Spannung von z.B. 24 V liegt, an die der Motor 25, wie dargestellt, direkt angeschlossen ist. Über einen Widerstand 48 und eine Zenerdiode 49 wird an einer Leitung 50 eine geregelte Spannung von z.B. + 5 V erzeugt. An diese ist über einen Vorwiderstand 52 und einen Knotenpunkt 53 der NTC-Widerstand 26 angeschlossen, der mit seinem anderen Anschluß an der Leitung 46, also an Masse, liegt. Wie man ohne weiteres erkennt, wird das Potential des Knotenpunkts 53 höher, wenn die Temperatur abnimmt, denn dann nimmt der Widerstandswert des Widerstands 26 zu. Auch der Mikroprozessor 20 und ein nachfolgend beschriebener Komparator 57 sind an diese geregelte Spannung angeschlossen, doch ist dies nicht dargestellt, um die Zeichnung nicht zu überladen.

Bricht die Zuleitung zum NTC-Widerstand 26 an der Stelle 54 oder an der Stelle 55, so hat dies dieselbe Wirkung wie eine starke Abnahme der Temperatur, d.h. das Potential am Knotenpunkt 53 springt dann auf den Wert des Potentials der Leitung 50, also auf einen hohen Wert.

Der Knotenpunkt 53 ist an den Minuseingang eines Komparators 57 angeschlossen, dessen Ausgang 58 an den Port 6 des Mikroprozessors 20 angeschlossen ist, der in Fig. 5 mit DIF bezeichnet ist. Dies deshalb, weil am Ausgang 58 des Komparators 57 im Betrieb eine Spannung $U_{dif}$ auftritt, die nachfolgend erläutert wird und mit deren Hilfe die Regelabweichung (gemäß obiger Definition) leicht erfaßt werden kann.

An die Leitung 50 ist zudem über einen Ladewiderstand 62 und einen Knotenpunkt 63 ein Kondensator C angeschlossen. Der Knotenpunkt 63 ist mit dem Pluseingang des Komparators 57 verbunden, ebenso mit dem Port 13 des Mikroprozessors 20. An diesen Port 13 ist intern im Mikroprozessor 20 ein npn-Transistor 65 angeschlossen, der mittels der Befehle des Mikroprozessors 20 gesteuert werden kann.

Arbeitsweise von Fig. 1

Wie bereits erläutert, entlädt der Transistor 65 den Kondensator C, wenn dieser Transistor durch einen entsprechenden Befehl leitend gesteuert wird. Bei einer solchen Entladung erhält der Port 13 des Mikroprozessors 20 - in Fig. 5 mit ENTLAD bezeichnet - ein niedriges Potential, also ENTLAD = L. Soll umgekehrt der Kondensator C geladen werden, so wird der Port 13 auf ein hohes Potential gelegt, also ENTLAD = H. Bei ENTLAD = L wird der Kondensator C, der als Speicherglied dient, auf einen Anfangswert gesetzt, nämlich einen fast vollständig entladenen Zustand. Dies geschieht bei einer vorgegebenen ersten Drehstellung des Rotors 27, und diese wird (beim Ausführungsbeispiel) gemessen, über das Ausgangssignal KOMM des Rotorstellungssensors 27. Es braucht an dieser Stelle nicht erläutert zu werden, daß man Rotorstellungen auf vielerlei Arten messen kann, z.B. auch ohne Sensor direkt aus den Spannungen und/oder Strömen in den Strängen 31, 32. Das Signal KOMM eines Hall-IC ermöglicht aber eine technisch einfache Lösung, und seine Verwendung wird deshalb bevorzugt, da es sich im Bereich der Kommutierungsstellungen des Rotors abrupt ändert, und zwar von einem hohen Wert (H) zu einem niedrigen Wert (L), oder umgekehrt. Wie oft dies bei einer Rotorumdrehung geschieht, hängt von der Zahl der Rotorpole ab. Bei einem zweipoligen Rotor 27, wie er in Fig. 1 sehr schematisiert dargestellt ist, geschieht dies zweimal pro Rotorumdrehung, und diese Stellen starker Änderung sind $180°$ voneinander entfernt. Dies sind die Kommutierungsstellen des Motors. Bei einem vierpoligen Rotor wären es vier solche Stellen pro Umdrehung, bei einem sechspoligen Rotor sechs Stellen, etc. Eine niedrige Polzahl hat im Rahmen der Erfindung den Vorteil, daß dem Mikroprozessor 20 mehr Rechenzeit zur Verfügung steht, bzw., daß ein langsamerer Mikroprozessor verwendet werden kann.

Es ist darauf hinzuweisen, daß beim Ausführungsbeispiel das Signal ENTLAD erst eine kurze Zeitspanne nach einer Kommutierung auf H gesetzt wird, vgl. Fig. 21. Auch dieser Zeitpunkt entspricht einer bestimmten Rotorstellung.

Beim Ausführungssbeispiel ist die Anordnung so gewählt, daß die Ladung des Kondensators C nur dann gestartet werden kann, nachdem das Signal KOMM von H auf L gegangen ist. Fig. 6 zeigt dies für den Fall, daß die Drehzahl des Motors niedriger ist als die gewünschte Drehzahl n* (Fig. 2), welche der augenblicklichen Temperatur T* am Sensor 26 entspricht und folglich den Sollwert n* für die Motordrehzahl darstellt.

Durch diese Änderung des Signals KOMM von H auf L wird zum Zeitpunkt $t_{10}$ der Fig. 6 das Signal ENTLAD am Port 13 auf H gesetzt, und der Kondensator C wird über den Widerstand 62 aufgeladen, in diesem Fall nach einer e-Funktion. (Naturgemäß wäre auch eine lineare Ladung möglich). Hierdurch steigt die Spannung $U_c$ am Kondensator C an, wie in Fig. 6c dargestellt, und zum Zeitpunkt $t_{11}$ erreicht das Potential des Punktes 63 die Höhe des Potentials am Punkt 53, welch letzteres der augenblicklichen Temperatur T* am Sensor 26 entspricht und folglich den Sollwert n* für die Motordrehzahl darstellt.

Sind die Potentiale der Punkte 53 und 63 gleich, so wird der Ausgang 58 des Komparators 57 von L auf H umgeschaltet, und man erhält also dort die Spannung $U_{dif}$, die in Fig. 6b dargestellt ist.

In bevorzugter Weise bewirkt das Signal $U_{dif}$ = H, daß direkt anschließend im Programmablauf ENTLAD = L gesetzt wird, vgl. Fig. 21, d.h. daß der Kondensator C anschließend sofort wieder entladen wird, wodurch $U_{dif}$ die Form eines Nadelimpulses erhält. Diese sofortige Entladung ergibt einen besonders ruhigen Motorlauf.

Man kann aber auch die Spannung $U_{dif}$ bis zur nächsten Kommutierungsstelle auf H halten. In diesem Fall wird dann, wenn $U_{dif}$ = H ist und sich KOMM von L auf H oder von H auf L ändert, ENTLAD = L gesetzt und der Kondensator C wird wieder über den Transistor 65 (im Mikroprozessor 20) entladen. Dies geschieht in diesem Fall zum Zeitpunkt $t_{12}$ der Fig. 6. Die nachfolgende Beschreibung bezieht sich auf die bevorzugte Variante mit sofortiger Entladung des Kondensators C nach Auftreten des Signals $U_{dif}$. Dieses wird bei dieser Variante - vgl. die folgenden Flußdiagramme - in Form eines Signals $U_{difalt}$ = H zwischengespeichert, damit die Information aus dem Signal $U_{dif}$ nach Entladen des Kondensators C nicht verlorengeht.

Die Messung der Regelabweichung erfolgt nun wie folgt:

Von der Kommutierungsstelle $t_{10}$, bei der die Aufladung des Kondensators C gestartet wurde, geht man zur nächsten Kommutierungsstelle $t_{12}$, und man mißt die zeitliche Differenz $T_d$ von dieser (nächsten) Kommutierungsstelle $t_{12}$ (oder einer Stelle in ihrer Nähe) bis zum Beginn von $U_{dif}$, also bis zum Zeitpunkt $t_{11}$. Da hier, wenn die Drehzahl zu niedrig ist, $t_{11}$ zeitlich vor $t_{12}$ liegt, wird diese Zeit $T_d$ als negativ gemessen. Ein negatives $T_d$ bedeutet, daß die Drehzahl zu niedrig ist, wobei der Betrag (Absolutwert) von $T_d$ aussagt, um wieviel die Drehzahl zu niedrig ist. Dementsprechend werden die Ströme $i_1$ (Fig. 6d) und $i_2$ (Fig. 6e) durch die Wicklungsstränge 31 bzw. 32 in diesem Fall größer gemacht, um die Drehzahl zu erhöhen.

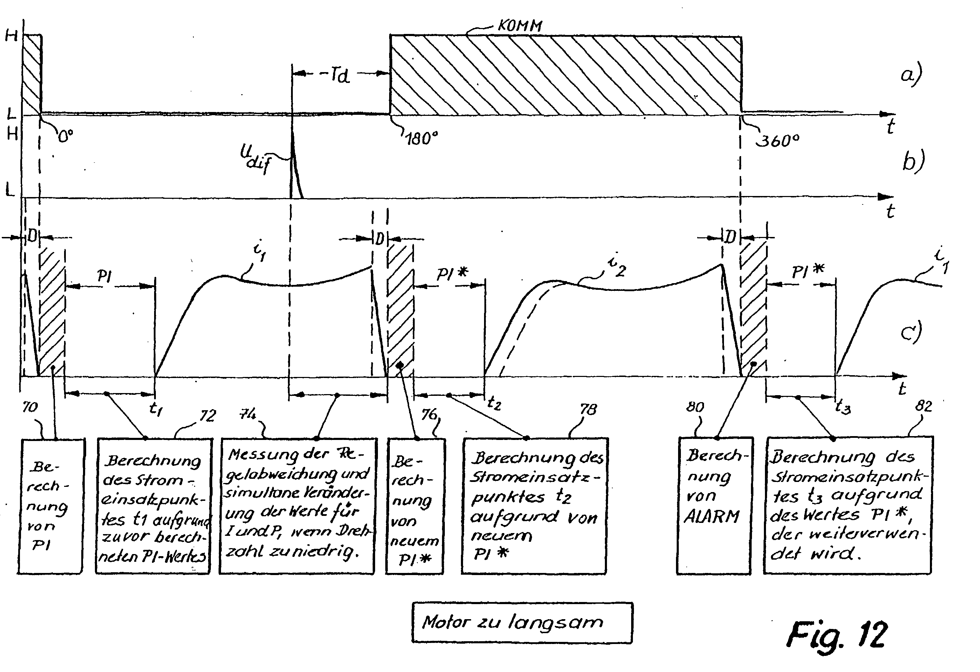

Wie dies im Prinzip geschieht, zeigt Fig. 12. Fig. 12a zeigt das Signal KOMM, hier für etwa eine Rotorumdrehung von $360°$ bei einem zweipoligen Motor 27. Fig. 12b zeigt das eben beschriebene Signal $U_{dif}$ für den Fall, daß die Drehzahl zu langsam ist, d.h. die Regelabweichung beträgt - $T_d$.

Wie in Fig. 12 bei 70 angegeben, wird während der ersten Grade der vollen Umdrehung ein Wert PI berechnet, wobei PI für Proportional-Integral-Regelung steht. Dies geschieht aus einem Zahlenwert P für dieProportionalregelung, und einem Zahlenwert I für die Integralreagelung, z.B. nach der Formel PI = I + 2P, wobei die Faktoren I und P aus vorhergehenden Umdrehungen des Motors vorhanden sind und in entsprechenden Speichern gespeichert sind. (Beim Einschalten des Motors werden entsprechende Werte für I und P bei der Initialisierung vorgegeben.)

Dieser Wert PI bestimmt dann, wie dargestellt, um wieviele Grade nach dem Ende der Berechnungsphase der Strom $i_1$ (durch den Strang 31) eingeschaltet wird, wie in Fig. 12 bei 72 angegeben. Je größer also PI wird, umso kleiner wird dieser Strom. Der Beginn des Stromflusses ist mit $t_1$ bezeichnet. Diese zeitliche Steuerung wird dadurch erreicht, daß das Ausgangssignal out1 am Ausgang 9 des Mikroprozessors 20 zu H gemacht wird, wenn der Strom $i_1$ eingeschaltet werden soll.

Dieser Strom fließt dann z.B. während eines Drehwinkels von 110°, und er wird abgeschaltet vor Erreichen der Kommutierungsstellung, welche hier dem Winkel 180° entspricht, und zwar um einen Winkel D vor dieser Kommutierungsstellung, wobei der Wert D einige Grad beträgt. Dies dient dazu, beim Abschalten des Statorstroms Stromspitzen zu vermeiden.

Mit Beginn des Signals $U_{dif}$ beginnt die Zeitmessung für die Regelabweichung -$T_{d,}$ und diese Messung dauert bis zur Kommutierungsstellung, also bis 180°.

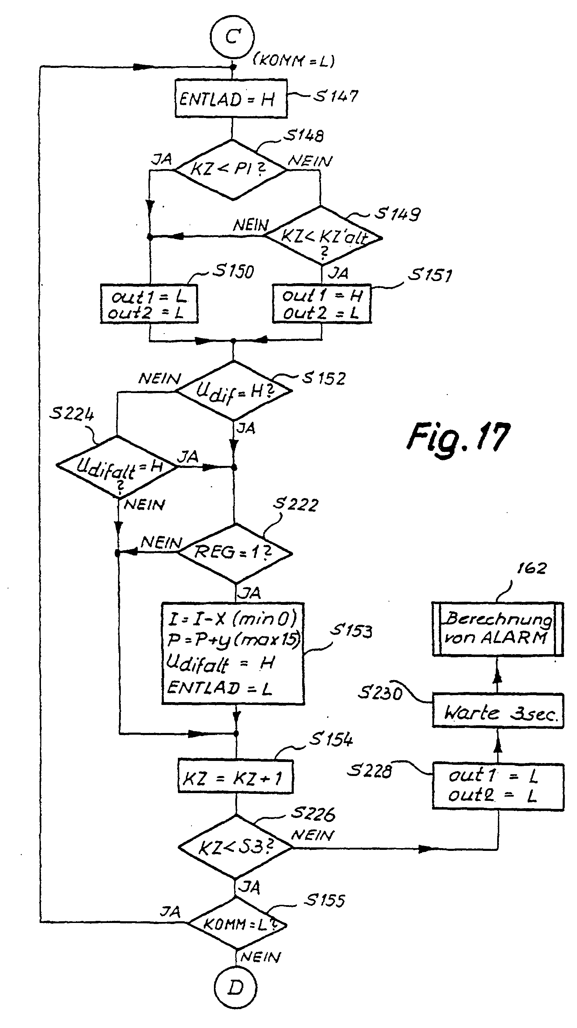

Da der Motor zu langsam läuft, werden bereits während dieser Zeitspanne $T_d$ die Werte für P und I herabgesetzt, und zwar umso mehr, je länger $T_d$ ist. Dies ist in Fig. 12 bei 74 angegeben. (Wenn der Regler nur ein P-Regler wäre, würde selbstverständlich nur ein Wert für P verändert.) Wie dies geschieht, wird nachfolgend anhand von Fig. 17 im Detail beschrieben.

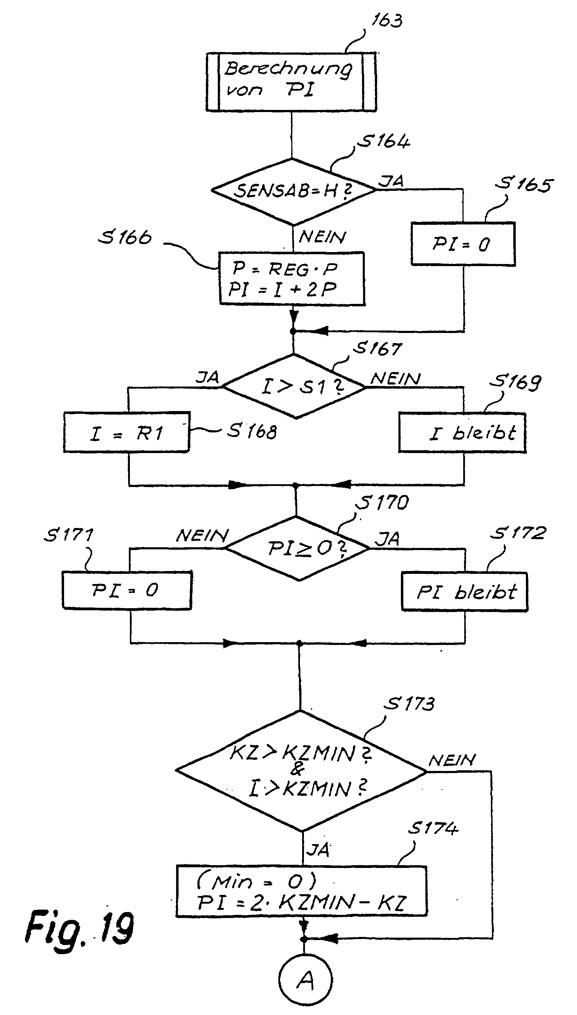

Bei der Drehstellung 180°, also am Ende der Messung von $T_d$, liegen also bereits modernisierte Werte für P und I vor, die kleiner sind als bisher, und im Drehwinkelbereich von z. B. 180 ° bis 190 ° wird nun aus diesen modernisierten Werten ein neuer Wert PI* berechnet, wie in Fig. 12 bei 76 angegeben. Diese Berechnung wird nachfolgend bei Fig. 19 im Detail beschrieben. Dieser Wert PI* bestimmt dann, wie bei 78 angegeben, den Einschaltzeitpunkt $t_2$ für den Strom $i_2$ im Strang 32, und dieser Strom $i_2$ fließt also länger, z. B. während 120°, als der Strom $i_1$. Auch der Strom $i_2$ endet um den Wert D vor der nächsten Kommutierungsstellung, die bei 360 ° liegt. Da der Strom $i_2$ während eines längeren Drehwinkels fließt, entsteht ein längeres antreibendes Drehmoment auf den Rotor 27, und der Motor wird schneller, d.h. die Drehzahl n nähert sich dem Wert n* an.

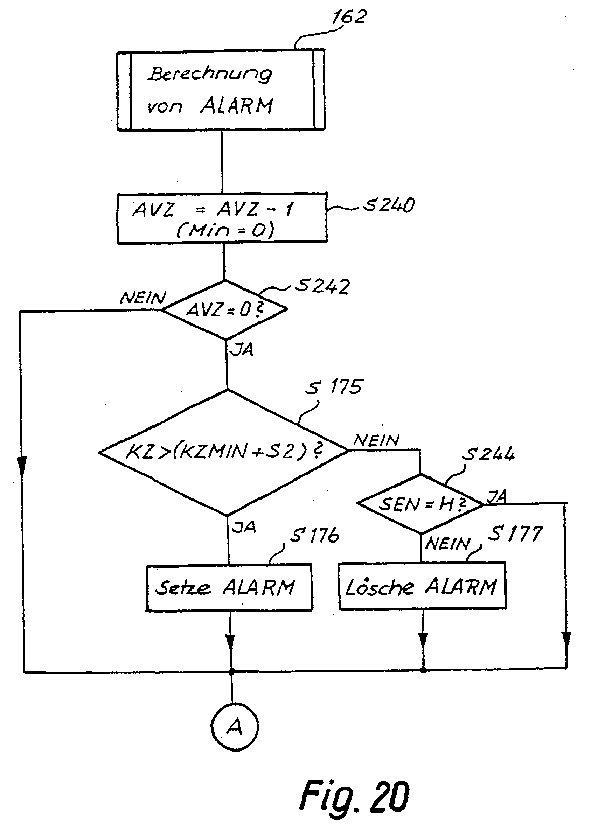

Im Winkelbereich von z.B. 360° bis 370° (entsprechend 0° bis 10 °) könnte erneut der Wert PI aus den gespeicherten Werten für P und I berechnet werden, die sich nicht geändert haben. Hier kann aber in vorteilhafter Weiterbildung der Erfindung auch eine Alarmüberwachung stattfinden, d.h. ein spezielles Rechenprogramm stellt fest, ob die Drehzahl n unterhalb eines unteren Grenzwertes liegt, und gibt einen Alarm, wenn dies der Fall ist. Dies ist in Fig. 12 bei 80 angegeben und wird nachfolgend bei Fig. 20 im Detail beschrieben.

Anschließend hieran wird der bei 76 berechnete Wert PI* weiterverwendet und bestimmt den Zeitpunkt $t_3$, an dem der Strom $i_1$ eingeschaltet wird. Dies ist in Fig. 12 bei 82 erläutert.

Die Vorgänge wiederholen sich dann, d.h. erneut wird ein Signal $U_{dif}$ erzeugt, das in diesem Fall später auftritt, da die Drehzahl etwas gestiegen ist, so daß der Absolutwert von -$T_d$ kürzer wird; die Werte für P und I werden verändert, d.h. weiter verkleinert, ein neuer Wert PI wird errechnet, etc., wie bereits ausführlich beschrieben.

Auf diese Weise sind verschiedenen Abschnitten einer Rotorumdrehung verschiedene Rechenschritte zugeordnet, d.h. die Stellung des Rotors 27 bestimmt darüber, was der Mikroprozessor 20 im Augenblick rechnet oder mißt. Anders gesagt, steuert die Rotorstellung den augenblicklichen Programmablauf.

Fig. 7 zeigt, was geschieht, wenn der Motor 25 mit der gewünschten Drehzahl läuft, d.h. die Motordrehzahl n ist hier gleich der gewünschten Drehzahl n*.

Auch hier wird die Ladung des Kondensators C gestartet, nachdem sich das Signal KOMM von H nach L ändert, z.B. in Fig. 7c zum Zeitpunkt $t_{14}$. Die Spannung $U_C$ steigt dann an und erreicht die Spannung $U_{53}$ am Knotenpunkt 53 ganz kurz nach dem Zeitpunkt $t_{15}$, an dem sich KOMM von L nach H ändert. Ab diesem Zeitpunkt $t_{15}$ wird nun die Zeit $T_d$ gemessen, und da die ansteigende Flanke von $U_{dif}$ praktisch mit $t_{15}$ zusammenfällt, ist $T_d = 0$, d.h. es liegt keine Regelabweichung vor.

In diesem Fall sind die Werte für P und I richtig und werden folglich nicht geändert, d.h. der Abstand PI, der z.B. in Fig. 12 bei 72 erläutert wird, bleibt auch bei den nachfolgenden Stromimpulsen unverändert.

Im Betrieb läuft der Motor weitgehend in diesem Zustand, d.h. die Werte für P und I ändern sich nur wenig, wenn der Motor 25 läuft und sich die Temperatur am Sensor 26 nicht ändert. Je nach Temperatur ergeben sich hier relativ kurze Motorstromimpulse $i_1$ und $i_2$, wie in Fig. 7d und Fig 7e dargestellt.

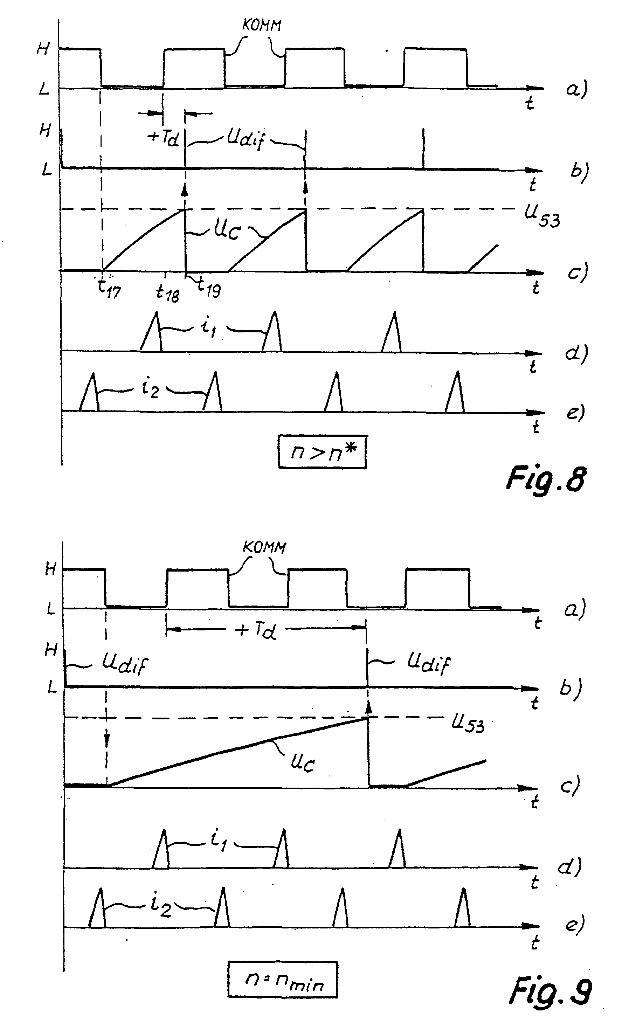

Fig. 8 zeigt, was geschieht, wenn die Drehzahl n höher wird als die gewünschte Drehzahl n*. Dies kann z.B. der Fall sein, wenn plötzlich kalte Luft angesaugt wird (im Winter wird ein Fenster geöffnet) und dadurch der Widerstandswert des Sensors 26 rasch zunimmt.

Auch hier wird die Ladung des Kondensators C zu einem Zeitpunkt $t_{17}$ gestartet, an dem das Signal KOMM von H auf L geht, und die Messung von $T_d$ erfolgt etwa ab dem Zeitpunkt $t_{18}$, an dem KOMM direkt anschließend wieder von L nach H geht.

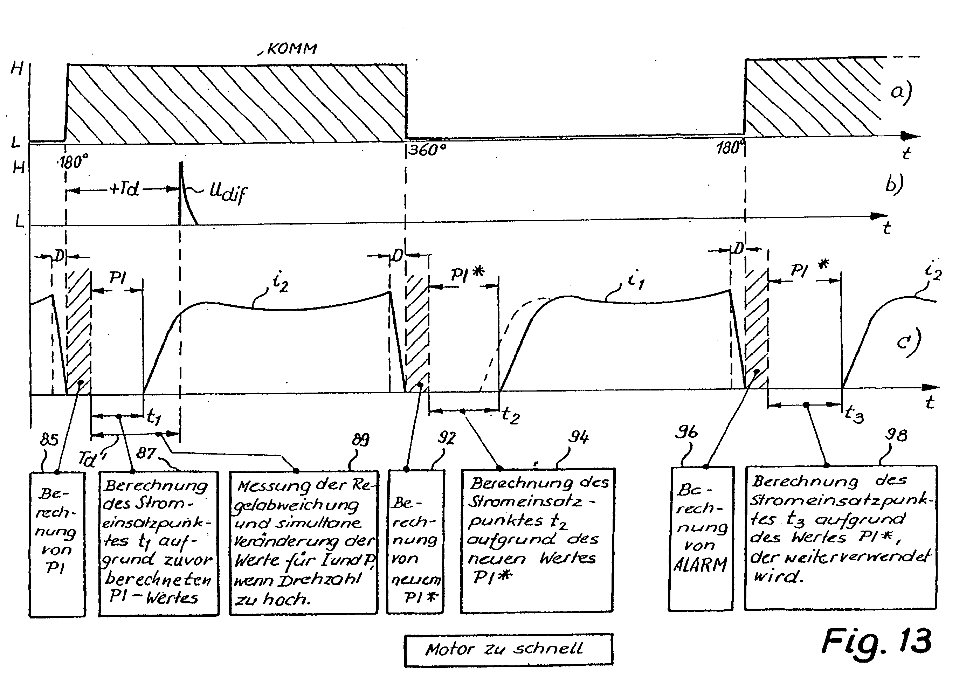

Das Signal $U_{dif}$ tritt hier erst zu einem Zeitpunkt $t_{19}$ auf, der zeitlich nach $t_{18}$ liegt, d.h. $T_d$ ist hier positiv. Das positive Vorzeichen bedeutet, daß der Motor zu schnell läuft, und der Absolutwert von $T_d$ gibt an, um wieviel der Motor zu schnell läuft. Dementsprechend müssen hier die Motorströme $i_1$ und $i_2$ kürzer gemacht werden. Wie dies geschieht, zeigt Fig. 13.

Ebenso wie Fig. 12 zeigt Fig. 13 die Abläufe bei einer vollen Rotordrehung von 360°, wie in Fig. 13a angegeben. Die Winkelstellung beginnt links bei 180°. In der Mitte erreicht sie 360 ° = 0°, und rechts erneut 180°, d. h. die Umdrehung ist dort abgeschlossen.

Bei Fig. 12 war die Drehzahl zu niedrig, und deshalb mußte $T_d$ in dem Zeitraum von 0° bis 180° gemessen werden, in dem Komm = L ist.

Bei Fig. 13 ist die Drehzahl zu hoch, und deshalb muß $T_d$ in dem Zeitraum von 180° bis 360° gemessen werden, in dem Komm = H ist.

Auch bei Fig. 13 wird zu Beginn, also im Winkelbereich direkt nach 180°, während einer Drehung von z.B. 10° der Wert PI aus den vorhandenen Werten für P und I errechnet, wie das bei Fig. 12 in der Beschreibung erläutert wurde. Dies ist in Fig. 13 bei 85 erläutert und erfolgt mit der Routine gemäß Fig. 19.

Dieser Wert PI bestimmt anschließend den Einsatzpunkt $t_1$ des Stromes $i_2$, wie in Fig. 13 bei 87 angegeben.

Gleichzeitig mit dieser Berechnung von $t_1$ wird hier auch ein Wert $T_d'$ gemessen, der etwas kürzer ist als $T_d$, denn die Messung beginnt erst mit Abschluß der Berechnungsphase 85, wie aus Fig. 13 klar hervorgeht. Dies kann ggf. in einem Programm kompensiert werden, da ja die Zeitdauer der Berechnungsphase 85 bekannt ist, doch funktioniert die Anordnung auch dann sehr zufriedenstellend, wenn der Wert $T_d'$ gemessen wird.

Da der Motor zu schnell läuft, sind die Werte für P und I zu klein, und deshalb werden sie während der Zeitdauer von $T_d'$ heraufgesetzt, umso mehr, je länger $T_d'$ andauert. Man erhält also bereits am Ende von $T_d'$ neue, erhöhte Werte für P und I, welche geeignet sind, die Drehzahl entsprechend etwas zu reduzieren.

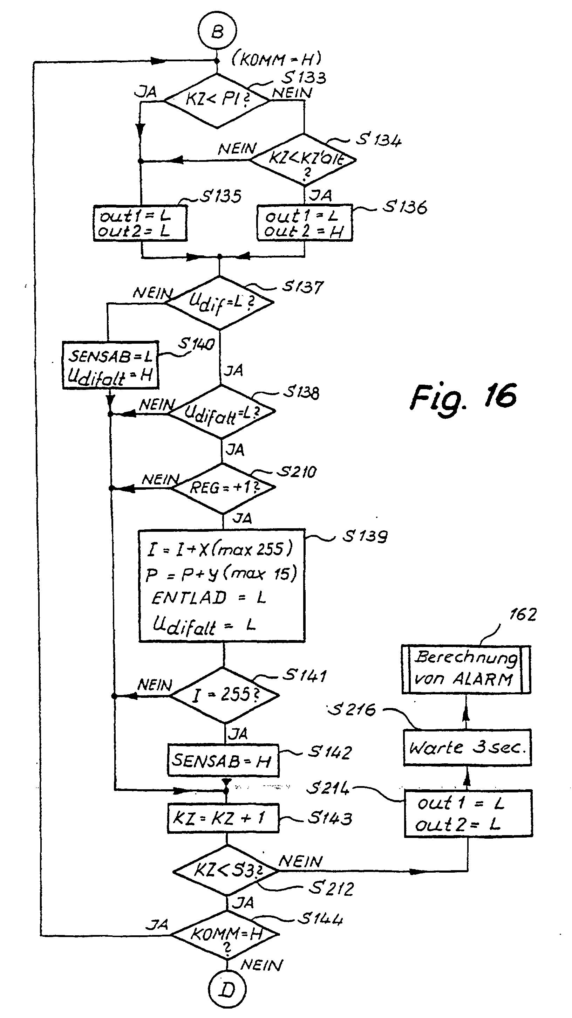

Dies ist in Fig. 13 bei 89 erläutert und geschieht mit der in Fig. 16 dargestellten Routine.

Es ist hier der Ort, darauf hinzuweisen, daß bei Fig. 12 die Messung eines negativen $T_d$ (Schritt 74) von der Berechnung des Zeitpunks $t_1$ (Schritt 72) zeitlich getrennt ist, während bei Fig. 13 die Schritte 87 und 89 zeitlich parallel ablaufen müssen. Man benötigt also hier verschiedene Regelalgorithmen. Da die Ladung des Kondensators C definitionsgemäß dann gestartet wird, wenn sich das Signal KOMM von H nach L ändert, also in Fig. 12 und 13 bei der Kommutierungsstellung 360 ° = 0°, läuft der Algorithmus für "Drehzahl zu niedrig" bevorzugt in dem Drehwinkelbereich ab, in dem KOMM = L ist, und der Algorithmus für "Drehzahl zu hoch" läuft bevorzugt in dem Drehwinkelbereich ab, in dem KOMM = H ist, wie in den Fig. 12 und 13 dargestellt.

Würde die Ladung des Kondensators C dann gestartet, wenn KOMM von L auf H geht, also an der Kommutierungsstellung bei 180°, so müßte der Algorithmus für "Drehzahl zu niedrig" dann ablaufen, wenn KOMM = H ist, und der Algorithmus für "Drehzahl zu hoch" müßte dann ablaufen, wenn KOMM = L ist. Dies ergibt sich ja auch aus der Symmetrie eines Elektromotors. Diese - nicht dargestellte - Variante kann in manchen Fällen Vorteile haben.

In gleicher Weise kann die Messung von $T_d$ auch an anderen Stellen der Rotorumdrehung erfolgen, d.h. wenn z.B. der Hallgenerator 28 sich an einer anderen Stelle des Rotors relativ zum Rotor 27 befindet, spielt das für die Messung der Zeit $T_d$ und ihres Vorzeichens keine Rolle. Es kommt nur darauf an, daß an definierten Stellen der Rotorumdrehung geeignete Signale für die Steuerung der Ladung des Kondensators C (also für Beginn der Ladung, und für Entladung), bzw. für eine Messung $T_d$ vorliegen. Die Ströme $i_1$ und $i_2$ dürfen naturgemäß nur in bestimmten Drehwinkelbereichen des Rotors fließen, nämlich in den Drehwinkelbereichen, in denen die bereits erwähnte Gegen-EMK hoch ist, und wenn der Hall-IC 28 so justiert ist, daß diese Ströme in den richtigen Drehwinkelbereich fließen, kann sein Ausgangssignal KOMM beide Funktionen erfüllen, nämlich

a) die Kommutierung steuern, und
b) die Messung der Regelabweichung ermöglichen.

Zurück zu Fig. 13. Im Bereich direkt nach 360 = 0°, also z.B. von 0° bis 10°, wird aus den zuvor modernisierten Werten von P und I ein neues PI* errechnet, das also hier größer ist als das vorhergehende PI, und dies ist in Fig. 13 bei 92 erläutert. Hierzu dient die Routine der Fig. 19.

Anschließend wird bei 94 der Strom-Einsatzpunkt $t_2$ anhand des neuen Wertes PI* errechnet. Während z.B. der Strom $i_2$ während eines Drehwinkels von 130° floß, fließt der Strom $i_1$ nur während eines Drehwinkels von 120 ° . (In der Praxis sind naturgemäß die Unterschiede wesentlich kleiner, aber die Verwendung größerer Unterschiede ermöglicht eine anschaulichere zeichnerische Darstellung.)

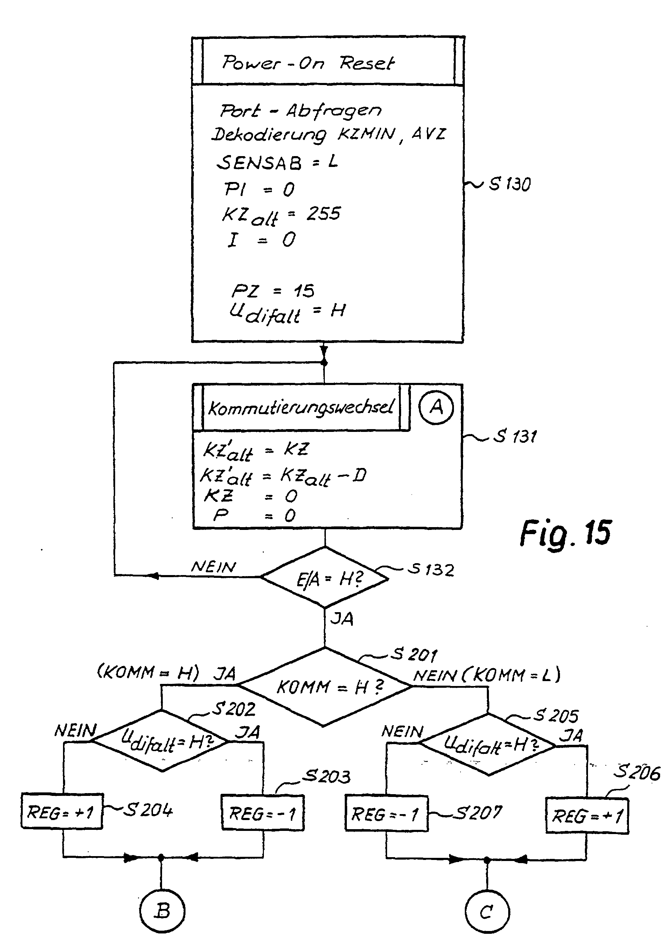

Sowohl der Strom $i_2$ wie der Strom $i_1$ wird aus den erläuterten Gründen um den Abstand D vor der Kommutierungsstellung (360 ° bzw. 180°) abgeschaltet, was im Programmschritt S131 (Fig. 15) berücksichtigt wird.

Im Anschluß an die Kommutierungsstellung 180° (rechts in Fig. 13) kann bei 96 berechnet werden, ob ein Alarm gegeben werden muß, oder der Wert PI kann erneut berechnet werden. Dieser bleibt unverändert, da kein neuer Meßwert $T_d$ vorliegt, wie in Fig. 13 bei 98 erläutert.

Wesentlich ist also, daß die Messung von $T_d$ parallel mit der Modernisierung der Werte für P und I abläuft, und ggf. auch parallel mit der Berechnung des Strom-Einsatzpunktes, und daß ggf. eine Messung anschließend für mehrere Stromimpulse verwendet wird, bis eine neue Messung erfolgt. Im Verlauf von ein oder zwei Rotorumdrehungen finden ja keine großen Drehzahländerungen statt.

Fig. 9 zeigt, was bei sehr niedrigen Temperaturen geschieht. In diesem Fall wird das Potential $U_{53}$ sehr hoch, und die Spannung $U_c$ erreicht dieses Potential erst nach einigen Motorumdrehungen, d.h. $T_d$ hat einen positiven Wert und ist sehr groß. Dies würde einer sehr niedrigen Motordrehzahl n entsprechen, die nicht zulässig ist. In diesem Fall schaltet der Regler auf eine Proportionalregelung um und hält eine untere Drehzahl von z.B. 1400 U/min ein. Die Stromimpulse $i_1$ und $i_2$ werden in diesem Fall äußerst kurz.

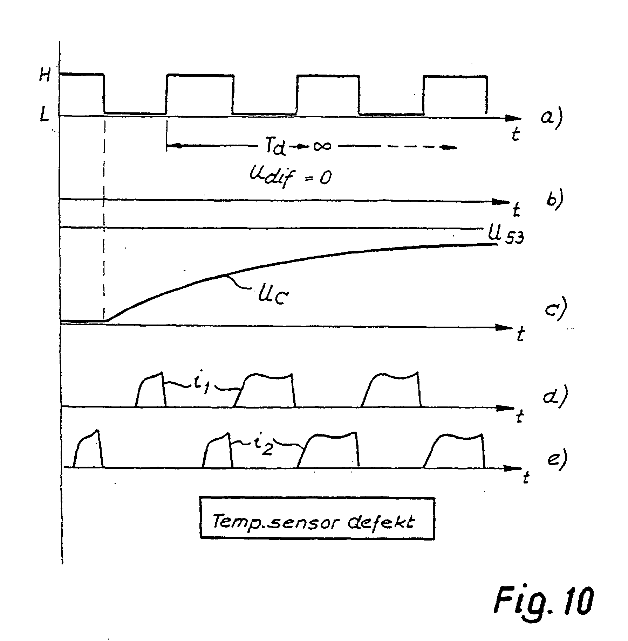

Fig. 10 zeigt, was geschieht, wenn der Temperatursensor 26 defekt ist, z.B. wegen einer Unterbrechung an den Stellen 54 und 55. In diesem Fall wird das Potential $U_{53}$ so hoch, daß die Spannung $U_C$ dieses Potential $U_{53}$ niemals erreicht. In diesem Fall schaltet die Anordnung auf maximale Drehzahl um, wie in Fig. 10d und 10e symbolisch dargestellt, d.h. die Statorstromimpulse $i_1$, $i_2$ erhalten ihre maximal mögliche Länge.

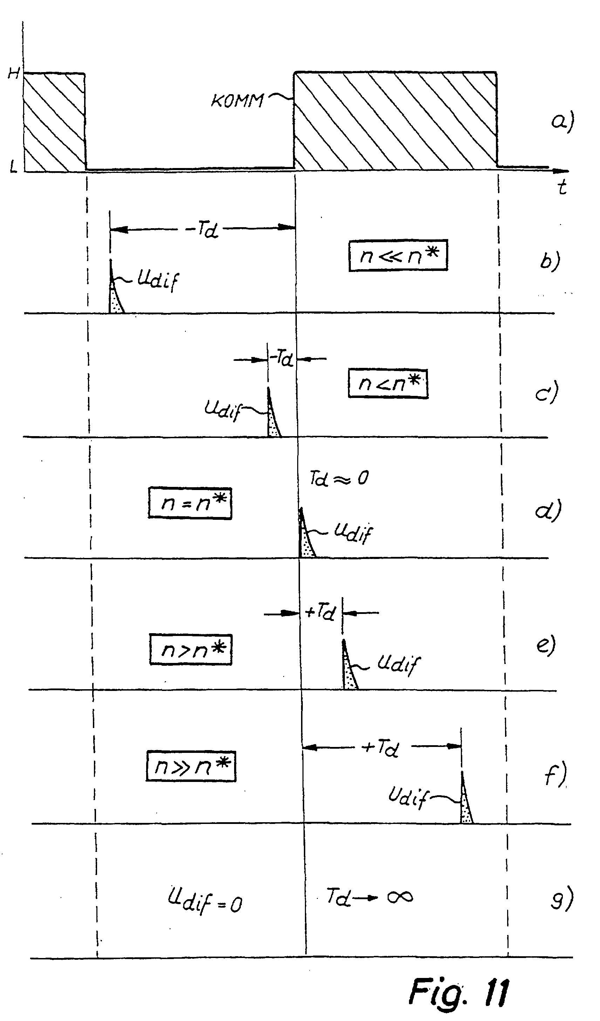

Fig 11 zeigt nochmals synoptisch die verschiedenen möglichen Fälle:

Bei Fig. $11_b$ ist der Motor um vieles zu langsam, und deshalb ist $T_d$ negativ und hat einen großen Absolutwert.

Bei Fig. 11 c ist der Motor etwas zu langsam. $T_d$ ist negativ, aber sein Absolutwert ist kleiner, verglichen mit Fig. 11b.

Bei Fig. 11d läuft der Motor mit der richtigen Drehzahl n = n*. Die Spannung $U_{dif}$ liegt nun im Bereich des Signals KOMM = H. $T_d$ hat den Wert 0.

Fig. 11e zeigt die Situation, wenn der Motor etwas zu schnell läuft. $T_d$ ist hier positiv und hat einen relativ kleinen Wert.

Bei Fig. 11f ist der Motor viel zu schnell, und $T_d$ ist positiv und hat einen großen Absolutwert.

Bei Fig. 11 g ist der Sensor defekt. $T_d$ hat einen sehr hohen Wert oder den Wert unendlich, d.h. $U_{dif}$ behält ständig den Wert 0. Die Auswertung dieses Zustands durch den Mikroprozessor 20 bewirkt eine Umschaltung des Motors 25 auf maximale Drehzahl.

In der Praxis kann die Schaltung mit dem Komparator 57 (Fig. 1) mittels eines npn-Transistors 100 und eines pnp-Transistors 102 realisiert werden, wie in Fig. 4 dargestellt. Gleiche Teile wie in Fig. 1 sind in Fig. 4 mit denselben Bezugszeichen bezeichnet und werden deshalb nicht nochmals beschrieben.

Die Basis des Transistors 100 ist mit dem Knotenpunkt 63 verbunden, sein Emitter mit dem Knotenpunkt 53, und sein Kollektor mit der Basis des Transistors 102. Der Emitter des Transistors 102 ist über einen Widerstand 103 an eine positive Spannung angeschlossen, und sein Kollektor ist über einen Widerstand 104 mit Masse 46 verbunden. Am Widerstand 104 kann dann im Betrieb die Spannung $U_{dif}$ abgenommen werden.

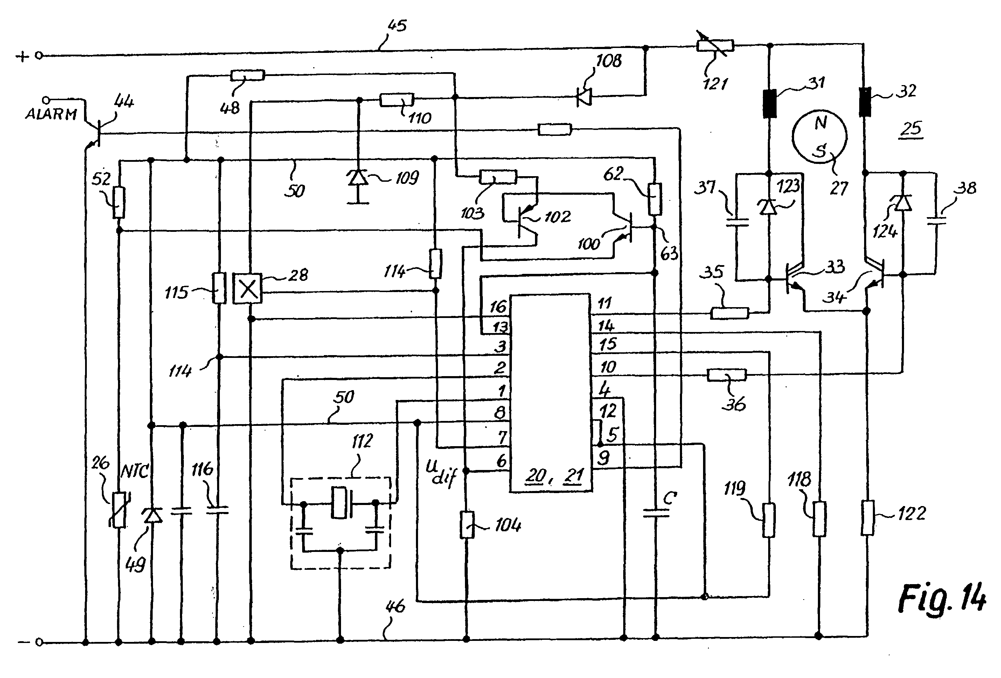

Fig. 14 zeigt eine Schaltung mit weiteren Einzelheiten. Für den Komparator verwendet sie die Schaltung gemäß Fig. 4, ansonsten die Schaltung gemäß Fig. 1, weshalb für gleiche Teile dieselben Bezugszeichen verwendet werden wie in den Fig. 1 und 4, und diese Teile werden gewöhnlich nicht nochmals beschrieben.

In der Zuleitung von der positiven Leitung 45 (z.B. 24 oder 48 V Betriebsspanriung) zu den elektronischen Bauteilen liegt hier eine Diode 108, welche bei falschem Anschluß, auch "Falschpolung" genannt, sperrt, und eine Zerstörung der Elektronik verhindert. Für die Stromversorgung des Hall-IC 27 sind eine Zenerdiode 109 und ein Vorschaltwiderstand 110 vorgesehen.

An die Anschlüsse 1 und 2 des Mikroprozessors 20 ist ein Taktgeber 112 von z.B. 6 MHz angeschlossen. Zwischen dem Port 7 und der Leitung 50 liegt ein Widerstand 114. Dies ist der sogenannte Pullupwiderstand des Hall-IC 27.

Der Resetanschluß (Port 3) des Mikroprozessors 20 ist mit einem Knotenpunkt 114 verbunden. Letzterer ist über einen Widerstand 115 mit der positiven Leitung 50 und über einen Kondensator 116 mit der negativen Leitung 46 verbunden.

Beim Einschalten des Motors ist der Kondensator 116 entladen, und folglich hat der Knotenpunkt 114 zunächst das Potential 0 V, also ein niedriges Signal L. Dieses Signal L bewirkt die Einschaltinitialisierung des Mikroprozessors 20, wie sie nachfolgend beim Schritt S130 beschrieben wird. Anschließend lädt sich der Kondensator 116 auf, und das Signal am Port 3 wird zu H, wodurch die Initialisierung abgeschlossen ist.

Die Potentiale an den Ports 14 und 15 bestimmen die minimale Drehzahl des Motors, also in Fig. 2 den Wert $n_{min}$. Dies wird erreicht durch die Widerstände 118, 119 und die dargestellten Verbindungen zur positiven Leitung 50 bzw. zur negativen Leitung 46.

Port 4 ist mit der negativen Leitung 46 verbunden. Das Potential am Port 12 (H oder L) bestimmt die Dauer der Alarmverzögerung AVZ (0 oder 10 Sekunden). Beim Ausführungsbeispiel sind die Ports 5 und 12 an die Leitung 50 (+) angeschlossen. Der E/A-Port ermöglicht eine digitale Steuerung des Motors 25: wird er auf L gelegt, so steht der Motor. Wird er auf H gelegt - wie in Fig. 14 - so läuft der Motor. Dies ermöglicht die Einschaltung des Motors mittels eines Niederspannungssignals.

In Reihe mit dem Motor 25 liegt auf der Plusseite ein PTC-Widerstand 121 als Sicherung (fuse) bei einem Blockieren des Motors, und auf der negativen Seite ein niederohmiger Widerstand 122, der für die Schaltvorgänge günstig ist. Parallel zum Kondensator 37 liegt eine Zenerdiode 123, parallel zum Kondensator 38 eine Zenerdiode 124, um den Mikroprozessor 20 vor Überspannungen von den Motorwicklungen 31, 32 zu schützen.

Die Arbeitsweise wurde bereits anhand der Fig. 1 und 4 beschrieben, und die Initialisierung beim Einschalten mittels des Widerstands 115 und des Kondensators 116 wurde ebenfalls bereits erläutert. Zum Mikroprozessor 20 vergleiche auch die Fig. 5, welche die verwendete symbolische Bezeichnung der einzelnen Ports angibt.

Nachfolgend werden nun die Flußdiagramme für die dargestellten Vorgänge im einzelnen erläutert, wie sie in den Fig. 15 bis 20 dargestellt sind und wie sie im Augenblick den optimalen Wissensstand darstellen. (Programme unterliegen häufigen Änderungen und Optimierungen, wie dem Fachmann bekannt ist.)

Fig. 15 zeigt bei Schritt S130 die Vorgänge beim Einschalten des Motors, also den Power-ON Reset, der beim Einschalten durch den Widerstand 115 und den Kondensator 116 ausgelöst wird, wie bei Fig. 14 beschrieben. Hierbei werden die verschiedenen Ports des Mikroprozessors 20 abgefragt, also in Fig. 5 der Port ATS (ob H oder L), der die Alarmdrehzahl angibt, z.B. 1200 U/min, ferner der Port SEN, welcher angibt, ob ein Alarmsignal wieder gelöscht werden darf, wenn die Drehzahl wieder normal wird, oder ob das Alarmsignal gespeichert werden muß. Ferner werden die Ports NG0 und NG1 abgefragt, welche zusammen die minimale Drehzahl $n_{min}$ festlegen, z.B. 1400 U/min, und der bereits erläuterte Wert E/A wird abgefragt, der angibt, ob der Motor laufen oder stehen soll. Die Werte NG0 und NG1 werden anschließend decodiert und ergeben einen Wert $KZ_{min}$ für die minimale Drehzahl, z.B. 120 Einheiten. (Je größer dieser Wert, desto kleiner die Drehzahl).

Ferner werden folgende Register gesetzt:

SENSAB auf L.
PI auf einen niedrigen Wert, z.B. 0.
$KZ_{alt}$ auf einen hohen Wert, z.B. 255.
I auf einen niedrigen Wert, z.B. auf 0.
PZ auf den Maximalwert, hier z.B. 15.
$U_{difalt}$ auf H.

SENSAB = L bedeutet, daß kein Sensorabriß (interrupted sensor connection) vorliegt, also daß in Fig. 1 keine Unterbrechung in den Leitungen zum Sensor 26 an der Stelle 54 oder 55 vorliegt. SENSAB = H bedeutet maximale Drehzahl und setzt die Regelung außer Kraft, d.h. hierbei wird PI = 0 gesetzt, vgl. Fig. 19, Schritt S165.

PI ist die Stellgröße des Reglers. Wie Fig. 21d zeigt, bestimmt sie, wann der Motorstrom eingeschaltet wird: Erst wenn der Kommutierungszähler KZ den Zählerstand PI, also die Stellgröße, erreicht hat, wird der Strom $i_1$ (oder $i_2$) eingeschaltet. Ist PI groß, so wird folglich der Strom spät eingeschaltet, also wenig Power. Ist PI klein, so wird der Strom früh eingeschaltet, also viel Power.

$KZ_{alt}$ ist ein Zählwert für den Kommutierungszähler KZ. (Der Kommutierungszähler KZ ist ein Teil des Mikroprozessors 20 - Fig. 5 - und daher nicht gesondert dargestellt.) Wie sich aus Fig. 21d ergibt, beginnt der Kommutierungszähler KZ kurz nach einer Kommutierung zu zählen, wenn die Berechnungsphase 128 (Erläuterung in Fig. 12 bei 70 oder 80) abgeschlossen ist. Hat der Kommutierungszähler bis PI gezählt, so schaltet er den betreffenden Strang ein, und es fließt ein Motorstrom. Hat der Kommutierungszähler den Wert $KZ'_{alt}$ erreicht, der um den Wert D (z.B. 4 Einheiten) kleiner ist als $KZ_{alt}$, so schaltet er diesen Strom wieder aus.

Der Kommutierungszähler KZ zählt anschließend weiter bis zur nächsten Kommutierung und mißt dabei den Wert KZ, also die Zeitdauer von KZ = 0 (Ende der Berechnungsphase 128) bis zur nächsten Kommutierung ($t_{30}$ in Fig. 21 a). Dieser Wert dient - wenn er zu hoch wird - als Anzeige für eine Blockierung des Rotors, wie nachfolgend erläutert wird. Dieser Wert KZ wird dann als wahrschleinlichster Wert für die Dauer der nächsten Kommutierungsphase im Register $KZ_{alt}$ als Wert $KZ_{alt}$ gespeichert. Es kann auch vorteilhaft sein, für den Wert $KZ_{alt}$ den gleitenden Durchschnitt (moving average) einer Mehrzahl von kurz zuvor gemessenen Werten für KZ zu verwenden, da dann der Motorlauf noch ruhiger wird.

Diese Variante ist nicht im Flußdiagramm dargestellt; für den Fachmann stellt ihre Realisierung kein Problem dar.

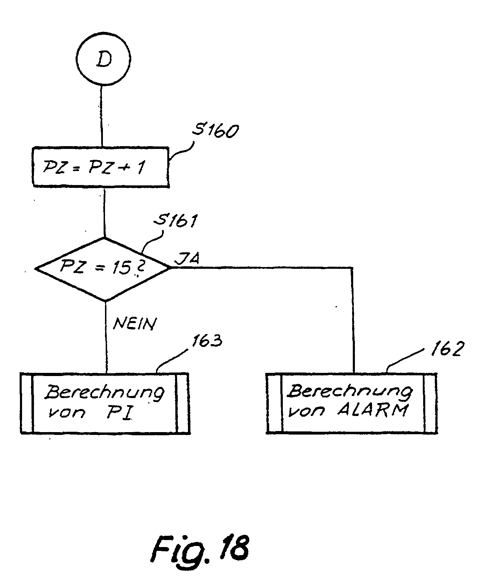

Beim Schritt S130 wird $KZ_{alt}$ vorgegeben, da noch kein Wert aus einer Messung vorliegt.
I ist der Integralfaktor des Drehzahlreglers, der beim Start vorgegeben werden muß.
PZ ist der Zählerstand eines Prüfzählers, vgl. Fig. 18.
PZ = 15 stellt sicher, daß nach der ersten Messung sofort ein neuer Wert für PI berechnet wird, und daß eine Alarmberechnung erst später erfolgt. Eine Anlaufverzögerung AVZ bewirkt, daß z.B. während 10 Sekunden nach dem Anlauf kein Signal ALARM ausgelöst werden kann, vgl. Fig. 20.

$U_{difalt}$ ist ein Registerwert, der auf H gesetzt wird, wenn während KOMM = L der Wert $U_{dif}$ = H auftritt. Dies sperrt bei KOMM = H die Veränderung der Werte für I und P, nicht aber bei KOMM = L. Dieser Wert wird deshalb beim Start auf H gesetzt, weil beim Start die Drehzahl zu niedrig ist, so daß P und I bei KOMM = L verändert werden müssen, nämlich verkleinert.

Anschließend geht der Mikroprozessor 20 zum Schritt S131, der bei jedem Kommutierungswechsel durchlaufen wird. Hier wird vom bereits erläuterten Wert $KZ_{alt}$ (Fig. 21d), der sich bei jeder Kommutierung ergibt (als Abstand zwischen KZ = 0 und $t_{30}$, oder als bereits erläuterter gleitender Durchschnitt, der bei jeder Kommutierung neu berechnet wird), der Wert D abgezogen, z.B. 4 Einheiten, so daß sich der Wert $KZ'_{alt}$ ergibt. Dieser wird als Grenzwert in den Kommutierungszähler KZ gesetzt, damit bei Erreichen dieses Wertes der Strom abgeschaltet wird. Außerdem wird der Kommutierungszähler KZ im Schritt S131 auf Null rückgestellt, damit er wieder von vorne an zählt, also ab KZ = 0, wie in Fig. 21 d dargestellt, und der Proportionalfaktor P des Reglers wird auf P = 0 gesetzt.

Beim Schritt S132 wird geprüft, ob das Freigabesignal E/A hoch ist. Nur in diesem Fall kann der Motor anlaufen. Sonst geht das Programm zum Schritt S131 zurück. Dies ermöglicht es, den Motor von einem Computer aus zu steuern.

Beim Schritt S201 wird dann geprüft, ob das Signal KOMM hoch oder niedrig ist. Ist KOMM = H, so prüft das Programm im Schritt S202, ob das Signal $U_{difalt}$ = H ist. Falls Ja, wird ein Vorzeichensignal REG im Schritt S203 auf -1 gesetzt, und das Programm geht dann weiter zur Routine der Fig. 16. REG = -1 bedeutet, daß die Drehzahl zu niedrig ist, und daß folglich in der Routine der Fig. 16 eine Veränderung der Parameter I und P gesperrt ist.

Ist $U_{difalt}$ = L, so wird im Schritt S204 REG = + 1 gesetzt, und das Programm geht ebenfalls weiter zur Routine nach Fig. 16. REG = +1 bedeutet, daß die Drehzahl zu hoch ist, und daß folglich in der Routine nach Fig. 16 die Parameter für I und P vergrößert werden dürfen, entsprechend dem gemessenen Wert für $T_d$.

Ist im Schritt S201 das Signal KOMM = L, so geht das Programm zum Schritt S205. Dort wird geprüft, ob $U_{difalt}$ = H ist. Falls Ja, wird im Schritt S206 REG = +1 gesetzt (Drehzahl zu hoch), und das Programm geht weiter zur Routine der Fig. 17. In diesem Fall ist dort die Veränderung der Parameter für I und P gesperrt.

Ist im Schritt S205 die Antwort Nein, so geht das Programm zum Schritt S207, wo REG = -1 gesetzt wird, d. h. die Drehzahl ist zu niedrig, und das Programm geht weiter zur Routine der Fig. 17, wo dann die Parameter für I und P verkleinert werden dürfen, entsprechend dem gemessenen Wert für $T_d$.

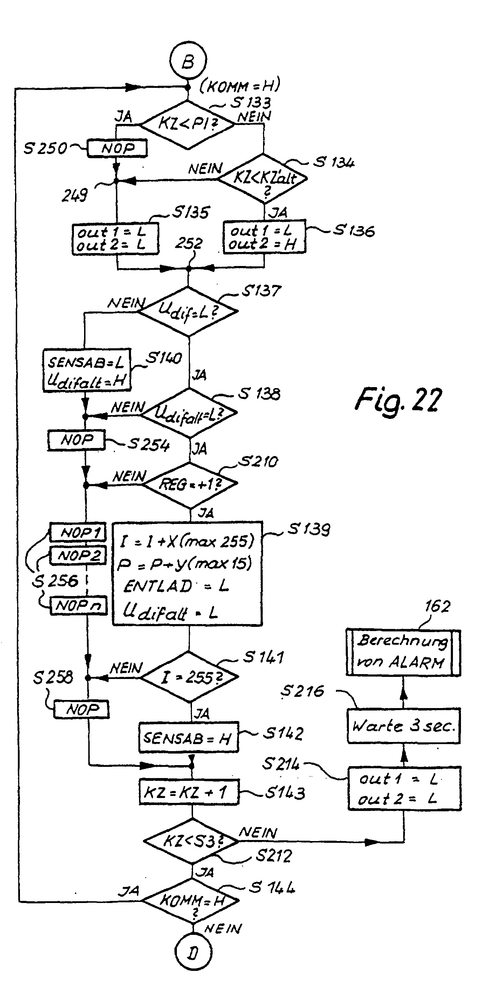

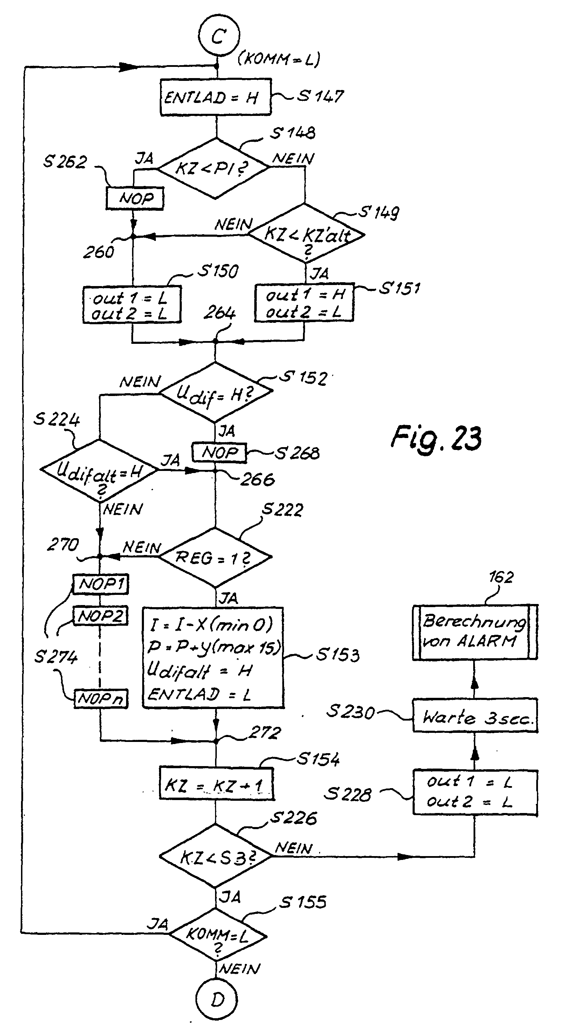

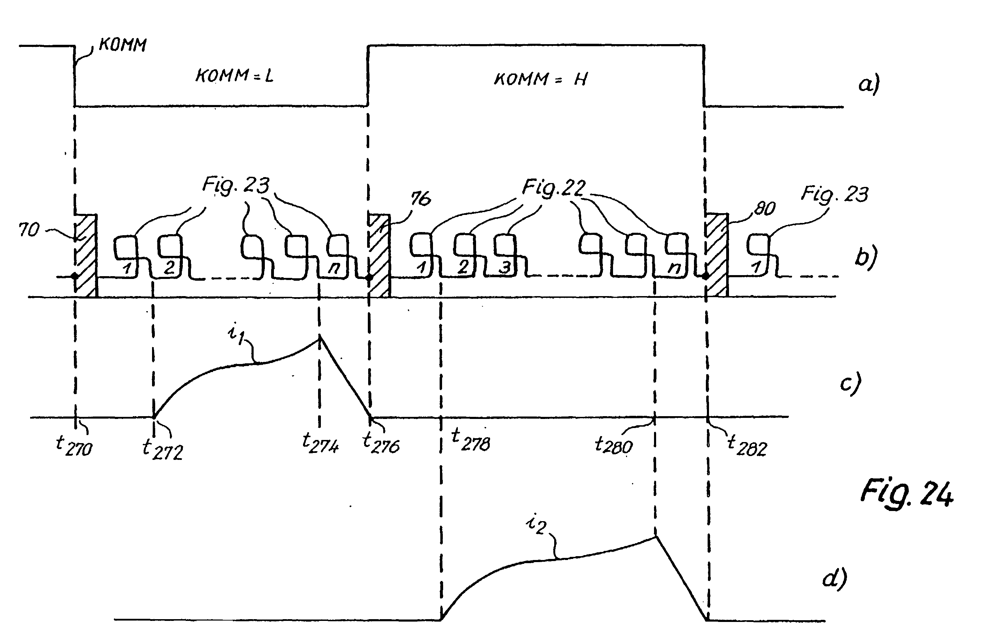

Als Vorbemerkung zu den Fig. 16 und 17 ist zu sagen, daß die dort dargestellten Schleifen zusätzlich eine Zeitmessung bewirken, nämlich durch Veränderung des Kommutierungszählers KZ (in den Schritten S143 bzw. S154). Dies setzt voraus, daß jeder Schleifendurchlauf, egal auf welchem Weg, gleich lang dauert, und dies wird dadurch erreicht, daß bestimmte, an sich kürzere Schleifendurchläufe mit NOP-Befehlen aufgefüllt sind, welche also nur Zeit verbrauchen, aber nichts bewirken. Diese NOP-Befehle werden in einem Flußdiagramm nicht dargestellt, doch wird hierauf hingewiesen, da eine optimale Funktion voraussetzt, daß jeder Schleifendurchlauf möglichst gleich lang ist. Die Dauer eines Schleifendurchlaufs der Fig. 16 entspricht also der Dauer eines Schleifendurchlaufs der Fig. 17, so daß die Werte für KZ direkt vergleichbar sind. Die Fig. 22 und 23 zeigen diese NOP-Befehle.

Fig. 16 zeigt die Routine für KOMM = H. Diese Routine implementiert Fig. 13, sofern der Motor zu schnell ist, d.h. die Faktoren P und I werden hier nur verändert, nämlich vergrößert, wenn der Motor zu schnell ist.

Beim Schritt S133 wird geprüft, ob der Kommutierungszähler KZ (im Mikroprozessor 20) den Wert PI erreicht hat, vgl. Fig. 21d. Ist dies der Fall, so wird der Strom $i_2$ eingeschaltet. Im Schritt S134 wird geprüft, ob der Kommutierungszähler den Wert $KZ'_{alt}$ erreicht hat, und dann wird der Strom $i_2$ wieder abgeschaltet.

out2 = L bedeutet, daß der Strom $i_2$ ausgeschaltet ist.

out2 = H bedeutet, daß der Strom $i_2$ eingeschaltet ist.

Analoges gilt für out1.

Der Schritt S135 bedeutet also, daß beide Ströme $i_1$ und $i_2$ ausgeschaltet sind, und S136 bedeutet, daß $i_2$ eingeschaltet ist, also der Strang 32 bestromt wird.

Bei S137 wird geprüft, ob $U_{dif}$ = L ist, vgl. Fig. 11d, 11e und 11f: solange $U_{dif}$ = L ist, wird (bei KOMM = H) $T_d$ gemessen, und die Werte für P und I sollten folglich im Schritt S139 verändert werden. Diese Veränderung erfolgt aber nur, wenn auch $U_{difalt}$ = L ist, d.h. wenn bei KOMM = L nicht vorher festgestellt wurde, daß die Drehzahl zu niedrig ist, und dies wird im Schritt S138 geprüft. (Bei zu niedriger Drehzahl dürfen die Werte P und I nur durch die Routine gemäß Fig. 17 verändert werden.)

Ferner wird in einem Schritt S21 0 als dritte Bedingung geprüft, ob REG = +1 ist, und nur wenn auch dies der Fall ist, geht das Programm weiter zum Schritt S139, also zur "Meßphase", in der die Werte I und P während der Dauer von $T_d$ verändert werden.

Ist das Ergebnis in Schritten S137, S138 und S210 "Ja", so wird im Schritt S139 der Faktor I um den Wert X erhöht, z.B. um den Wert 3, und der Faktor P wird um Y erhöht, z.B. um den Wert 1. I kann maximal auf 255 erhöht werden, P maximal auf 15, wobei diese Zahlen - wie immer - nur Beispiele sind, damit die Materie nicht zu trocken wird. $U_{difalt}$ bleibt in S 139 weiterhin auf L. Das Register ENTLAD wird auf L gesetzt.

Wenn in S137 $U_{dif}$ auf H ist, also die Messung von $T_d$ abgeschlossen ist, vgl. Fig. 11, wird im Schritt S140 $U_{difalt}$ auf H und SENSAB auf L gesetzt, und das Programm geht direkt zum Schritt S143, wo der Kommutierungszähler KZ um den Wert 1 erhöht wird. Analoges gilt, wenn bei S138 $U_{difalt}$ = H ist und wenn bei S210 REG = -1 ist.

Auf S139 folgt der Schritt S141, wo geprüft wird, ob I = 255 ist, also seinen Maximalwert hat. Dies bedeutet den Fall der Fig. 11g, also Sensorabriß. Deshalb wird, falls dies zutrifft, in S142 das Register SENSAB auf H gesetzt, was nachfolgend die Umschaltung des Motors auf maximale Drehzahl bewirkt. Ist I<255, so geht das Programm direkt zu S143.

Nach S142 wird bei S143 der Kommutierungszähler KZ ebenfalls um den Wert 1 erhöht.

Danach wird in einem Schritt S212 überprüft, ob der erreichte Wert des Kommutierungszählers KZ (im Mikroprozessor 20) kleiner ist als ein Schwellwert S3, der z.B. den Wert 260 haben kann. Trifft dies zu, so geht das Programm zum Schritt S144. Überschreitet aber KZ den Schwellwert S3, d.h. der Motor dreht äußerst langsam oder steht (Rotor 27 ist blockiert), so geht das Programm zum Schritt S214, wo die Ströme in beiden Strängen 31 und 32 abgeschaltet werden. Es folgt bei S216 eine Wartezeit von z.B. 3 Sekunden, d.h. der Motor bleibt 3 Sekunden stromlos, und das Programm geht dann weiter zum Schritt S162 in Fig. 20, wo ggf. ein Alarm ausgelöst wird. Danach wird der Strom im Motor erneut eingeschaltet, d.h. es folgt automatisch ein neuer Anlaufversuch nach ca. 3 Sekunden Wartezeit, so daß der Motor nicht überhitzt werden kann, aber sofort wieder anläuft, wenn die Blockierung weggefallen ist.

Ist beim Schritt S212 die Antwort Ja, so wird anschließend im Schritt S144 geprüft, ob sich das Signal KOMM geändert hat. Ist es immer noch gleich, so geht das Programm in einer Schleife zurück zum Schritt S133. Hat sich das Signal KOMM geändert, so geht das Programm weiter zur Routine der Fig. 18.

Fig. 17 stellt die Fortsetzung von Fig. 15 für den Fall dar, daß KOMM = L ist. Diese Routine implementiert Fig. 12. Bei ihr werden die Meßvorgänge, d.h. die Veränderungen von I und P, nur dann vorgenommen, wenn der Motor zu langsam ist. Fig. 21 zeigt beispielhaft die Abläufe bei dieser Routine.

Bei Schritt S147 wird der Ausgang 13 des Mikroprozessors 20 auf H gesetzt, also ENTLAD = H. Fig. 21 c zeigt, daß bei ENTLAD = H die Ladung des Kondensators C beginnt und folglich die Spannung $U_C$ (Fig. 21b) ansteigt.

Wie Fig. 21 c zeigt, wird das Signal ENTLAD erst im zeitlichen Abstand von der Änderung des Signals KOMM (von H auf L) auf H gesetzt. Der zeitliche Abstand entspricht der Dauer der Berechnungsphase 128 (Fig. 21d), die nachfolged anhand der Fig. 19 und 20 erläutert wird. Diese Änderung des Signals ENTLAD von L nach H kann nur erfolgen, wenn sich zuvor KOMM von H auf L geändert hat, d.h. diese Änderung ist nur Bestandteil der Routine gemäß Fig. 17.

Schritt S148 entspricht S133.

Schritt S149 entspricht S134.

Schritt S150 entspricht S135.

Schritt S151 entspricht S136, mit dem Unterschied, daß bei S151 der Strom $i_1$ eingeschaltet wird. Auf die entsprechende Beschreibung dieser Schritte bei Fig. 16 wird verwiesen.

Bei S152 erfolgt die Prüfung, ob $U_{dif}$ hoch ist. Dies entspricht den Fig. 11b, 11c und 11d, d.h. $T_d$ wird erst ab dem Augenblick gemessen, ab dem $U_{dif}$ hoch wird. Ist dies der Fall, so wird als nächstes im Schritt S222 geprüft, ob REG = -1 ist, vgl. Schritt S207, d.h. ob die Drehzahl zu niedrig ist. Falls ja, so wird bei S153 der Integralfaktor I um den Wert X (z.B. 3) reduziert, der Porportionalfaktor P wird um den Wert Y (z.B. 1) erhöht, und $U_{difalt}$ wird auf H gesetzt, damit nachfolgend bei KOMM = H der Schritt S139 nicht ausgeführt wird, und ENTLAD wird auf L gesetzt, d.h. der Kondensator C wird sofort wieder entladen, wenn $U_C$ den Wert $U_{58}$ erreicht hat, wie in Fig. 21 b und 21c dargestellt. Dies hat den Vorteil, daß für die Entladung über den Transistor 65 (Fig. 1) genügend Zeit zur Verfügung steht, wobei das Signal $U_{difalt}$ anschließend ein Substitut für das Signal $U_{dif}$ ist.

Wenn $U_{dif}$ = L ist, geht das Programm zum Schritt S224, und dort wird geprüft, ob $U_{difalt}$ = H ist. Falls ja, geht das Programm zum Schritt S222, falls nein, zum Schritt S154, wo der Kommutierungszähler KZ um den Wert 1 erhöht wird. Anschließend wird im Schritt S226 geprüft, ob KZ kleiner als ein Schwellwert S3 (z.B. 260) ist, und falls ja, geht das Programm zum Schritt S155. Falls nein, geht es zu den Schritten S228 und S230, und dann zu S162. Schritt S228 entspricht S214 der Fig. 16, Schritt S230 entspricht S216 in Fig. 16. Auf die dortige Beschreibung wird deshalb verwiesen.

Bei S155 wird geprüft, ob sich das Signal KOMM geändert hat. Ist es unverändert, so geht das Programm zurück zum Schritt S147. Hat sich KOMM geändert, so geht das Programm weiter zur Routine der Fig. 18.

Fig. 18 zeigt, was anschließend an Fig. 16 oder Fig. 17 geschieht. Bei S160 wird der Prüfzähler PZ (vgl. S130) zum den Wert 1 erhöht. Dieser Zähler zählt immer bis 15 und geht dann zurück auf den Wert Null.

Bei S161 wird deshalb geprüft, ob PZ = 15 ist. Falls Ja, folgt die Routine 162 für ALARM (Fig. 20), falls Nein, die Routine 163 (Fig. 19) für die Berechnung des Wertes PI. Beide Routinen finden in der Berechnungsphase 128 (Fig. 21d) statt, also jeweils direkt nach einer Kommutierung, was eine - erwünschte - kleine Einschaltverzögerung der Ströme $i_1$ bzw. $i_2$ bewirkt. Diese Routinen werden also, bezogen auf Fig. 12 und 13, immer in den Drehstellungsbereichen von 0° bis ca. 10° und von 180° bis ca. 190° aktiv, wo der Motor 25 ohnedies stromlos sein sollte. Beide Routinen sind mit Vorteil zeitlich gleich lang, was durch die erläuterten NOP-Befehle erreicht werden kann.

In Fig. 19 wird bei S164 geprüft, ob das Register SENSAB = H ist, vgl. S142 in Fig. 16. In diesem Fall wird bei S165 der Wert PI auf Null gesetzt, was nachfolgend bei Fig. 16 oder 17 bewirkt, daß der Strom schon bei KZ = 0 eingeschaltet wird, also der Motor mit maximaler Leistung und folglich maximaler Drehzahl läuft. Ein Sensorabriß (Fig. 1: Unterbrechung an Stelle 54 oder 55) hat also die Folge, daß sich der Motor wie ein normaler, ungeregelter Motor verhält.

Falls $U_{dif}$ irgendwann wieder zu H wird, wird SENSAB wieder auf L gesetzt (S140 in Fig. 16), und die Drehzahl wird dann wieder geregelt.

Falls kein Sensorabriß vorliegt, wird bei S166 der zuvor ermittelte Faktor P mit dem Vorzeichensignal REG multipliziert, und anschließend wird gemäß der Formel

$$PI = I + 2P$$

der Wert PI ermittelt, Funktion siehe Fig. 21d.

Bei S167 wird geprüft, ob der Faktor I größer als ein Schwellwert S1 ist, z.B. größer als 240. Falls Ja, wird bei S168 der Faktor I auf den Wert R1 zurückgesetzt, z.B. auf 208. Dies verhindert, daß bei niedrigen Drehzahlen Alarm gegeben wird, d.h. der Zähler für 1 kann in diesem Fall nicht den Wert 255 erreichen, da durch das Rücksetzen sein Zählerstand künstlich niedrig gehalten wird. (Bei Erreichen von I = 255 wird, wie erläutert, PI auf 0 gesetzt und der Motor läuft mit maximaler Drehzahl).

Ist der Faktor I kleiner als der Schwellwert S1, so wird er unverändert gelassen, Schritt S169.

Bei S170 wird in analoger Weise geprüft, ob der Wert PI negativ ist, und falls Ja, wird er bei S171 auf Null zurückgesetzt. Andernfalls bleibt er unverändert (S172).

Bei S173 erfolgt die Prüfung, ob die untere Grenzdrehzahl (Fig. 2: $n_{min}$) unterschritten ist, und ob der Faktor I größer als $KZ_{min}$ (vgl. S130 in Fig. 15) ist.

Falls nicht, geht das Programm direkt zum Schritt S131 zurück.

Falls eine Überschreitung vorliegt, geht der Regler im Schritt S174 auf eine P-Regelung über, d.h. der Wert PI wird auf zweimal $KZ_{min}$ minus KZ gesetzt. Auf diese Weise wird verhindert, daß die Drehzahl n unter den unteren Grenzwert $n_{min}$ (Fig. 2) sinkt.

Der mit der Routine 163 errechnete Wert PI wird anschließend in Fig. 16 und/oder Fig. 17 verwendet, ggf. während mehrerer aufeinanderfolgender Zyklen, wie bereits bei Fig. 12 und 13 erläutert, d.h. auch nach dem Schritt S174 geht das Programm zurück zum Schritt S131 (Fig.15).

Fig. 20 zeigt die Alarm-Routine 162. In einem Schritt S240 wird der Wert für die Alarmverzögerung AVZ um den Wert 1 reduziert, und anschließend wird bei S242 geprüft, ob AVZ = 0 ist. Falls Ja, geht das Programm zu Schritt S175. Dort wird geprüft, ob der Wert KZ größer ist als die Summe von $KZ_{min}$ und einem Schwellwert S2, der z.B. den Wert 47 haben kann. Diese Summe kann z.B. einer Drehzahl von 1200 U/min entsprechen. Wird diese Summe überschritten, so wird der Ausgang 14 ("ALARM") des Mikroprozessors 20 auf H gesetzt (Schritt S176), und ein Alarm wird ausgelöst. Ist die Summe nicht überschritten, so geht das Programm zum Schritt S244, wo geprüft wird, ob der Ausgang 4 (SEN) des Mikroprozessors 20 hoch ist. Falls Ja, wird ein gesetzter Alarm nicht gelöscht, sondern weiter gespeichert. Falls Nein, wird das Signal ALARM rückgesetzt, also gelöscht (Schritt S 177).

Falls in S242 AVZ größer als 0 ist (AVZ hat einen Minimalwert von 0), so geht das Programm von dort direkt zum Schritt S131 (Fig. 15) zurück, und dies gilt ebenso bei SEN = H, ebenso nach den Schritten S176 oder S177.

Wie in einer Vorbemerkung zu den Fig. 16 und 17 bereits ausführlich dargelegt, dienen die Programmschleifen gemäß Fig. 16 und 17 auch zur Zeitmessung, d.h. diese Schleifen sind so ausgelegt, daß jeder Durchlauf durch eine Schleife, egal auf welchem Weg, die gleiche Zeit erfordert, so daß mittels dieser Schleifen eine Zeitmessung möglich ist. Dabei sind die Durchlaufzeiten für die Schleifen nach Fig. 16 und Fig. 17 nach Möglichkeit identisch.

Erreicht wird dies durch die Einfügung von NOP-Befehlen dort, wo sonst ein Schleifendurchlauf zu kurz würde. (NOP = No operation; ein NOP-Befehl bewirkt nichts, außer einer zeitlichen Verzögerung des Programmablaufs. Naturgemäß kann man statt eines NOP-Befehls jede andere Art von Befehl verwenden, die auf den Lauf des Motors ohne Einfluß ist.) Die Verwendung von NOP-Befehlen ist dargestellt in den Fig. 22 und 23. Fig. 22 ist - bis auf die NOP-Befehle - identisch mit Fig. 16, und Fig. 23 ist - bis auf die NOP-Befehle identisch mit Fig. 17. Die Teile aus den Fig. 16 und 17 werden deshalb nicht nochmals beschrieben.

In Fig. 22 ist zwischen dem JA-Ausgang des Schritts S133 und dem Knotenpunkt 249 ein NOP-Befehl S250 eingefügt, der die gleiche Zeitdauer hat wie der Schritt S134, so daß sich für die Ausgangssignale JA und NEIN des Schritts S133 dieselbe Zeitdauer des Durchlaufs bis zum Knotenpunkt 252 ergibt.

Zwischen dem NEIN-Ausgang des Schritts S138 und dem NEIN-Ausgang des Schritts S210 liegt ein NOP-Befehl S254, dessen Zeitdauer der Zeitdauer von S210 entspricht.

Zwischen dem NEIN-Ausgang des Schritts S210 und dem NEIN-Ausgang des Schritts S139 liegen mehrere NOP-Befehle S256, deren Zeitdauer der des Schritts S139 entspricht. (Durch das Durchlaufen mehrerer NOP-Befehle 256 ergibt sich eine entsprechend längere zeitliche Verzögerung.)

Zwischen dem NEIN-Ausgang des Schritts S141 und dem Eingang des Schritts S143 liegt ein NOP-Befehl S258, dessen Zeitdauer derjenigen des Schritts S142 entspricht.

Man erkennt also, daß die Schleife nach Fig. 22 für jeden Durchlauf dieselbe Zeit benötigt, unabhängig davon, welche Schritte im einzelnen Fall durchlaufen werden.

Fig. 23 ist - bis auf die NOP-Befehle - identisch mit Fig. 17. Deshalb werden die Teile aus Fig. 17 nicht erneut beschrieben. In Fig. 23 ist zwischen dem JA-Ausgang des Schritts S148 und dem Knotenpunkt 260 ein NOP-Befehl S262 eingefügt, der die gleiche Zeitdauer hat wie der Schritt S149, so daß sich für die Ausgangssignale JA und NEIN des Schritts S148 dieselbe Zeitdauer des Durchlaufs bis zum Knotenpunkt 264 ergibt.

Zwischen dem JA-Ausgang des Schritts S152 und dem Knotenpunkt 266 liegt ein NOP-Befehl 268, dessen Zeitdauer dem Schritt S224 entspricht.

Zwischen dem NEIN-Ausgang des Schritts S222, also dem Knotenpunkt 270, und dem Ausgang 272 des Schritts S153, liegen NOP-Befehle S274, deren kombinierte Zeitdauer der Zeitdauer des Schritts S153 entspricht.

Man erkennt also, daß die Schleife nach Fig. 23 für jeden Durchlauf, egal auf welchem Weg, stets dieselbe Zeit benötigt, unabhängig davon, welche Schritte im einzelnen Fall durchlaufen werden.

Wie bereits erläutert, ist die Durchlaufzeit für die Schleife nach Fig. 22 identisch mit der Durchlaufzeit für die Schleife nach Fig. 23. Dies kann ggf. dadurch erreicht werden, daß in Fig. 22 zwischen den JA-Ausgang des Schritts S144 und den Eingang des Schritts S133 ein oder mehrere NOP-Befehle eingeschaltet werden, oder alternativ in Fig. 23 zwischen den JA-Ausgang des Schritts S155 und den Eingang des Schritts S147.

Selbstverständlich sollte die Durchlaufzeit für die Schleifen nach Fig. 22 und 23 möglichst kurz sein. Dies hängt von der Taktfrequenz des Mikroprozessors 20 ab. Bei dem verwendeten Mikroprozessor 17103GS mit einer Taktfrequenz von 6 MHz ergaben sich folgende Zeiten:

| | |
|---|---|
| Zeit für den Durchlauf einer Schleife nach Fig. 22 oder nach Fig. 23 (50 Befehle) | 133 µs |
| Zeit für den Ablauf nach Fig. 19 (38 Befehle) | 102 µs |
| Zeit für den Ablauf nach Fig. 20 (35 Befehle) | 93µs |

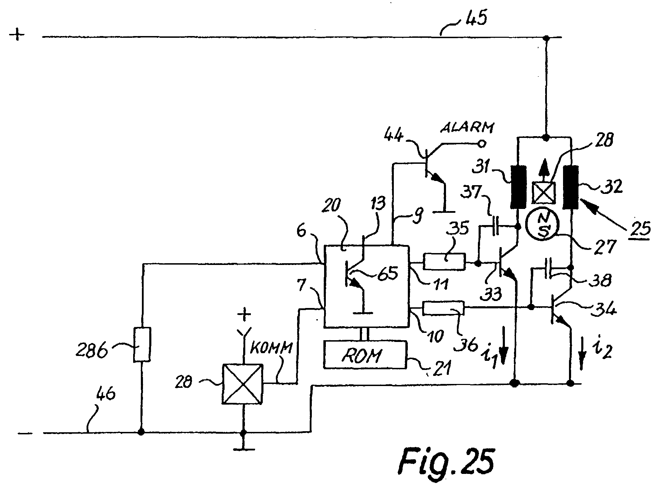

Fig. 24 zeigt in grafischer Darstellung den Durchlauf mehrerer Schleifen im Verlauf der Kommutierungsvorgänge. In Fig. 24a ist das Kommutierungssignal KOMM dargestellt (analog Fig. 21a), und zum Zeitpunkt $t_{270}$ wird angenommen, daß in Fig. 18, Schritt S160, der Zählerstand PZ = 13 erreicht wurde. Deshalb schließt sich in der Berechnungsphase 70 (vgl. Fig. 12) die Berechnung des Wertes PI gemäß Fig. 19 an.

Anschließend an die Berechnungsphase 70 folgen nun Schleifendurchläufe gemäß Fig. 23, und sofern z.B. für PI der Wert 1 errechnet wurde, wird der Strom $i_1$ nach Ablauf des ersten Scheifendurchlaufs zum Zeitpunkt $t_{272}$ eingeschaltet. Abgeschaltet wird er nach Ende des Schleifendurchlaufs (n - x) zum Zeitpunkt $t_{274}$, also vor der Änderung des Kommutierungssignals KOMM. Dies wurde bereits ausführlich beschrieben und wird deshalb hier nicht wiederholt. Die Größe x hat bei Fig. 24 den Wert 1, d.h. der Strom $i_1$ wird nach der vorletzten Schleife abgeschaltet.

Zum Zeitpunkt $t_{276}$ ändert sich das Kommutierungssignal auf H, und in Fig. 18 wird der Zählerstand PZ = 14 erreicht. In der Berechnungsphase 76 (vgl. Fig. 12) wird daher erneut der Wert PI gemäß Fig. 19 errechnet, und gemäß diesem Wert PI wird zum Zeitpunkt $t_{278}$ der Strom $i_2$ eingeschaltet, also zum Beispiel nach dem ersten Schleifendurchlauf gemäß Fig. 22, sofern sich für PI der Wert 1 ergeben hat. Abgeschaltet wird der Strom $i_2$ nach Ende des Schleifendurchlaufs (n - x) zum Zeitpunkt $t_{280}$, also zeitlich vor der Änderung des Signals KOMM. Dies wurde bereits ausführlich beschrieben und wird deshalb hier nicht wiederholt. (Schritte S134 und S135 in Fig. 16; Schritte 149 und S150 in Fig. 17). Die Größe x hat auch hier als Beispiel den Wert 1, d.h. der Strom $i_2$ wird nach Ende der vorletzten Schleife abgeschaltet.

Zum Zeitpunkt $t_{282}$ ändert sich das Signal KOMM (Fig. 24a) auf L, und in Fig. 18 wird gleichzeitig der Zählerstand PZ = 15 erreicht. Dies bedeutet, daß in der anschließenden Berechnungsphase 80 (vgl. Fig. 12) das Alarmsignal gemäß Fig. 20 berechnet wird. Anschließend werden dann erneut die Schleifen gemäß Fig. 23 durchlaufen. Der Wert PI wird in diesem Fall aus der Berechnungsphase 76 unverändert übernommen, wie bereits bei Fig. 12 beschrieben.

Der Kommutierungszähler KZ zählt also jeweils die Zahl der Schleifen gemäß Fig. 22 oder 23, die durchlaufen werden, und bestimmt daraus angenähert den zeitlichen Abstand zwischen aufeinanderfolgenden Kommutierungszeitpunkten, z.B. zwischen den Zeitpunkten $t_{270}$, $t_{276}$, $t_{282}$ etc. Da jede Schleife eine vorgegebene Zeitdauer hat, mißt also der Kommutierungszähler KZ eine Zeitdauer.

Die Berechnungsphasen 70, 76, 80 etc. haben eine vorgegebene Zeitdauer, d.h. mit zunehmender Drehzahl des Motors nimmt ihr prozentualer Anteil an der Zeitdauer zwischen zwei Kommutierungssignalen (z.B. zwischen $t_{270}$ und $t_{276}$ in Fig. 24) zu, was vorteilhaft ist. Die Berechnungsphasen bewirken eine Stromlücke, die besonders bei zweipulsigen Motoren von Vorteil ist, speziell bei hohen Drehzahlen und folglich hohen Amplituden der Ströme $i_1$ und $i_2$. Wenn z.B. in Fig. 24c die Amplitude des Stromes $i_1$ so hoch ist, daß dieser zum Kommutierungszeitpunkt $t_{276}$ noch nicht auf 0 abgesunken ist, so stört das nicht, da dieser Strom $i_1$ erst am Ende der Berechnungsphase 76 den Wert 0 erreicht haben muß, denn frühestens zu diesem Zeitpunkt kann der Strom $i_2$ eingeschaltet werden. (Die Ströme $i_1$ und

$i_2$ sollten nicht gleichzeitig-fließen, da dies zu starken Funkstörungen und Motorgeräuschen führen kann und den Wirkungsgrad des Motors verschlechtert. Auch würden hierdurch hohe Bremsmomente entstehen.) Analoges gilt für den Strom $i_2$, der erst innerhalb der Berechnungsphase 80 den Wert 0 erreicht zu haben braucht.

Wie bereits an einem Zahlenbeispiel dargelegt, kann die Dauer der Berechnungsphasen 70, 76, 80 etc. etwas differieren, je nachdem, ob eine Berechnung des PI-Wertes (Fig. 19) oder eine Alarmberechnung (Fig. 20) durchgeführt wird. Die Differenzen in der Dauer der Berechnungsphasen liegen gewöhnlich in der Größenordnung einiger μs, so daß sie auf den Lauf des Motors keinen Einfluß haben. Man könnte aber auch die Berechnungsphasen mittels NOP-Befehlen gleich lang machen, sofern das gewünscht wird.

Die Durchlaufzeiten durch die Schleifen nach Fig. 22 und 23 sollten dagegen möglichst exakt gleich lang sein, da die Schleifendurchläufe im Kommutierungszähler KZ aufsummiert werden und sich folglich auch kleinere Differenzen bei der Summenbildung aufsummieren und zu einem unruhigen Lauf des Motors führen können. Beträgt z.B. die zeitliche Differenz zwischen einem Schleifendurchlauf der Fig. 22 und einem Schleifendurchlauf der Fig. 23 drei μs, und die Schleifen werden jeweils 50 mal durchlaufen, so ergibt sich eine zeitliche Differenz von 50 x 3 μs = 150 μs, was mehr als der Zeitdauer eines vollen Schleifendurchlaufs entsprechen würde. Solche Fehler müssen vermieden werden, wenn ein ruhiger Lauf des Motors erwünscht ist.

Fig. 25 zeigt die Schaltung analog Fig. 1 bei Auslegung des Motors auf maximale Drehzahl, also ohne Drehzahlregelung. Der Eingang 6 des Mikroprozessors 20 ist über einen Widerstand 286 mit der Minusleitung 46 verbunden. Die entspricht einem ständigen Wert von $U_{dif} = 0$, also dem Bruch der Zuleitung zum Sensor 26 an der Stelle 54 oder 55 der Fig. 1. In diesem Fall läuft der Motor ungeregelt mit maximaler Drehzahl, d.h. gemäß Schritt S165 in Fig. 19 wird PI = 0 gesetzt, und es fließt ein Motorstrom direkt ab dem Ende der jeweiligen Berechnungsphase 70, 76, 80 etc. (Fig. 12 und 24).

Die anderen Funktionen des Motors bleiben aber auch bei Fig. 25 unverändert erhalten, d.h. der Motor kann leistungslos ein- und ausgeschaltet werden (Schritt S132 in Fig. 15), die Alarmfunktion arbeitet unverändert, wie anhand von Fig. 20 beschrieben, ebenso die Blockiersicherung (Schritte S214, S216 in Fig. 16; Schritte S228, S230 in Fig. 17). Mittels der in Fig. 5 dargestellten Eingänge NG0, NG1 können verschiedene Alarmdrehzahlen programmiert werden. Mittels des Eingangs SEN (Fig. 5) kann gemäß Fig. 20 die Alarmspeicherung programmiert werden, und mittels des Eingangs ATS die Alarmverzögerung. In diesem Fall übernimmt also der Mikroprozessor 20 die Kommutierung, die Blockiersicherung und die Alarmüberwachung, während eine Drehzahlregelung entfällt. Die Drehzahl des Motors wird in diesem Fall vorgegeben durch die Betriebsspannung und durch die Auslegung der Wicklung des Motors. Es hat sich gezeigt, daß diese Variante in vielen Fällen ausreicht und eine preiswerte Alternative darstellt, besonders im Hinblick auf die Alarmüberwachung und die Blockiersicherung, welche beide von dem Mikroprozessor übernommen werden, der auch die Kommutierung des Motors steuert.

Die analoge Vorrichtung zur Berechnung der Regelabweichung kann auch durch eine digital arbeitende Vorrichtung nach dem gleichen Prinzip ersetzt werden, wobei dann als Speicherglied beispielsweise ein Zähler verwendet werden kann, der bei Erreichen eines bestimmten temperaturabhängigen Grenzwerts ein Signal $U_{dif}$ abgibt. Das Prinzip bleibt genau dasselbe. Jedoch wird die analoge Messung derzeit bevorzugt, da sie außerordentlich einfach ist und keinen Analog-Digital-Wandler, z.B. für die Temperatur, erfordert.

Im vorstehend beschriebenen Ausführungsbeispiel für einen zweipoligen Rotor 27 wurden die Drehstellungswerte in mechanischen Graden angegeben, z.B. 180°. Bei einem Rotor mit mehr als einem Polpaar müssen diese Werte durch elektrische Grade ersetzt werden, also z.B. statt 180° dann 180° el. (electrical degrees), wie das dem Fachmann des Elektromaschinenbaus geläufig ist.

**Patentansprüche**

1. Verfahren zur Überwachung eines kollektorlosen Gleichstrommotors, mit folgenden Merkmalen:

   a) Bei der Bestromung eines vorgegebenen Stranges des Motors wird die Zeitdauer (KZ) der Kommutierungsphase etwa ab der Kommutierung zu Beginn dieser Kommutierungsphase bis etwa zur Kommutierung am Ende dieser Kommutierungsphase fortlaufend als digitaler Wert erfasst;
   b) diese Zeitdauer (KZ) wird mit einem vorgegebenen Schwellenwert (S3) verglichen;
   c) überschreitet diese Zeitdauer (KZ) den Schwellenwert (S3), so wird, ggf. unter Berücksichtigung zusätzlicher Parameter, ein Alarmsignal (ALARM) gesetzt (S176).

2. Verfahren nach Anspruch 1, bei welchem etwa während der Dauer einer Kommutierungsphase nacheinander mehrfach eine Programmschleife vorgegebener zeitlicher Dauer durchlaufen und jeder Schleifendurchlauf in einem Zähler (KZ) erfasst wird, um die Zeitdauer dieser Kommutierungsphase fortlaufend zu erfassen.

3. Verfahren zur Beeinflussung der Drehzahl eines kollektorlosen Gleichstrommotors, mit folgenden Merkmalen:

   a) Bei der Bestromung eines vorgegebenen Stranges des Motors wird die Zeitdauer (KZ) der Kommutierungsphase etwa ab der Kommutierung zu Beginn dieser Kommutierungsphase bis etwa zur Kommutierung am Ende dieser Kommutierungsphase fortlaufend als digitaler Wert erfasst;
   b) diese Zeitdauer (KZ) wird mit einem vorgegebenen Schwellenwert (S3) verglichen;
   c) überschreitet diese Zeitdauer (KZ) den Schwellenwert (S3), so wird der Motor stromlos gemacht (S214; S228).

4. Verfahren nach Anspruch 3, bei welchem der Motor im Schritt c) während eines vorgegebenen Zeitintervalls (S216; S230) stromlos gemacht wird, und nach Ablauf dieses vorgegebenen Zeitintervalls ein neues Einschalten des Motors versucht wird

5. Verfahren nach Anspruch 4, bei welchem nach Ablauf des vorgegebenen Zeitintervalls ein Alarmsignal (ALARM) gesetzt wird (S176).

6. Verfahren nach einem der Ansprüche 3 bis 5, bei welchem die Zeitdauer (KZ) der Kommutierungsphasen für mehr als einen Strang (31, 32) fortlaufend erfasst und jeweils mit dem Schwellenwert (S3) verglichen wird.

7. Verfahren nach einem oder mehreren der vorhergehenden Ansprüche, bei welchem während einer Kommutierungsphase mehrfach eine Programmschleife vorgegebener zeitlicher Dauer durchlaufen und jeder Durchlauf in einem Schleifenzähler (KZ) gezählt wird.

8. Verfahren nach Anspruch 7, bei welchem die Schleifen verschiedener Kommutierungsphasen verschiedene Programmstrukturen haben.

9. Verfahren nach Anspruch 7 oder 8, bei welchem der Schleifenzähler (KZ) mindestens einen Vorgang im Verlauf einer Kommutierungsphase steuert, z.B. Einschalten eines Stromes (S133), Ausschalten eines Stromes (S134) und/oder Überwachung einer Mindestdrehzahl (S212).

10. Verfahren nach einem oder mehreren der Ansprüche 7 bis 9, bei welchem die Programmschleife einen Messalgorithmus (S137, 138, 139) zur Erfassung einer einer Regelabweichung entsprechenden Zeitlichen Differenz (Td, Td') aufweist.

11. Verfahren nach Anspruch 10, bei welchem der Messalgorithmus Schritte (S139; S153) zur Anpassung eines Regelparameters (I, P) an die erfasste zeitliche Differenz (Td, Td') aufweist.

12. Verfahren nach Anspruch 10 oder 11, bei welchem der Messalgorithmus (S139; S153) in Form einer Verzweigung in der Programmschleife enthalten ist, welche nur während der Zeitdauer der zeitlichen Differenz (Td, Td') durchlaufen wird.

13. Verfahren nach Anspruch 12, bei welchem die zeitliche Dauer für das Durchlaufen einer Programmschleife mindestens nahezu unabhängig davon ist, ob die Verzweigung durchlaufen wird oder nicht.

14. Kollektorloser Gleichstrommotor mit einer Anordnung zur Überwachung seiner Drehzahl darauf, ob diese Drehzahl im Betrieb einen unteren Grenzwert unterschreitet, mit folgenden Merkmalen:

   a) Es ist eine Vorrichtung vorgesehen, welche die Zeitdauer (KZ) einer Kommutierungsphase etwa ab der Kommutierung zu Beginn dieser Kommutierungsphase bis etwa zur Kommutierung am Ende dieser Kommutierungsphase fortlaufend als digitalen Wert erfasst;
   b) es ist eine Vorrichtung zum Vergleich dieser Zeitdauer (KZ) mit einem vorgegebenen Schwellenwert (S3) vorgesehen;
   c) es ist eine Vorrichtung vorgesehen, welche ein Alarmsignal (ALARM) erzeugt (S176), wenn diese Zeitdauer (KZ) den Schwellenwert (S3) überschreitet.

15. Motor nach Anspruch 14, bei welchem etwa während der Dauer einer Kommutierungsphase nacheinander mehrfach eine Programmschleife vorgegebener zeitlicher Dauer durchlaufen und jeder Durchlauf in einem Zähler (KZ) erfasst wird, um die Zeitdauer einer Kommutierungsphase zu erfassen.

**16.** Kollektorloser Gleichstrommotor nach Anspruch 14 oder 15, bei welchem ein Zähler (KZ) zur Erfassung der Zeitdauer einer Kommutierungsphase vorgesehen ist.

**17.** Kollektorloser Gleichstrommotor nach Anspruch 16, bei welchem der Zähler Bestandteil eines Mikroprozessors oder Mikrocontrollers (20) ist, welcher zur Steuerung der Kommutierung des Motors dient.

**18.** Kollektorloser Gleichstrommotor nach Anspruch 16 oder 17, mit einem Rotor, dessen Rotormagnet eine trapezförmige Magnetisierung aufweist.

**19.** Verwendung eines kollektorlosen Gleichstrommotors nach einem oder mehreren der Ansprüche 14 bis 18 zum Antrieb eines Lüfters.


**Claims**

**1.** Method for monitoring a commutatorless direct-current motor, with the following features:

a) when a predetermined phase winding of the motor is energised, the length of time (KZ) of the commutation phase roughly from the commutation at the beginning of this commutation phase to roughly to the commutation at the end of this commutation phase is detected continuously as a digital value;
b) this length of time (KZ) is compared with a predetermined threshold value (S3);
c) if this length of time (KZ) exceeds the threshold value (S3), an alarm signal (ALARM) is set (S176), possibly allowing for additional parameters.

**2.** Method according to claim 1, in which a programme loop with a predetermined length of time is run through a plurality of times in succession for roughly the length of time of a commutation phase and each loop pass is detected in a counter (KZ) in order to detect the length of time of this commutation phase continuously.

**3.** Method for influencing the rotational speed of a commutatorless direct-current motor, with the following features:

a) when a predetermined phase winding of the motor is energised, the length of time (KZ) of the commutation phase roughly from the commutation at the beginning of this commutation phase to roughly to the commutation of the end of this commutation phase is detected continuously as a digital value;
b) this length of time (KZ) is compared with a predetermined threshold value (S3);
c) if this length of time (KZ) exceeds the threshold value (S3), the motor is de-energised (S228).

**4.** Method according to claim 3, in which the motor is de-energised in the step c) for a predetermined interval of time (S216; S230), and after this predetermined interval of time has elapsed, an attempt is made to turn on the motor anew.

**5.** Method according to claim 4, in which after the predetermined interval of time has elapsed, an alarm signal (ALARM) is set (S176).

**6.** Method according to one of claims 3 to 5, in which the length of time (KZ) of the commutation phases is detected continuously for more than one phase winding (31, 32) and in each case compared with the threshold value (S3).

**7.** Method according to one or more of the preceding claims, in which a programme loop with a predetermined length of time is run through a plurality of times during a commutation phase and each pass is counted in a loop counter (KZ).

**8.** Method according to claim 7, in which the loops of different commutation phases have different programme structures.

**9.** Method according to claim 7 or 8, in which the loop counter (KZ) controls at least one operation in the course of a commutation phase, e.g. turning on a current (S133), turning off a current (S134) and/or monitoring a minimum rotational speed (S212).

**10.** Method according to one or more of claims 7 to 9, in which the programme loop comprises a measuring algorithm (S137, 138, 139) for detecting a time difference (Td, Td') corresponding to a control deviation.

**11.** Method according to claim 10, in which the measuring algorithm comprises steps (S139; S153) for adapting a control parameter (I, P) to the detected time difference (Td, Td').

**12.** Method according to claim 10 or 11, in which the measuring algorithm (S139; S153) is present in the form of a branch in the programme loop which is only run through during the length of time of the time difference (Td, Td').

**13.** Method according to claim 12, in which the length of time for running through a programme loop is at least almost independent of whether the branch is run through or not.

**14.** Commutatorless direct-current motor with an arrangement for monitoring its rotational speed to see whether this rotational speed in operation falls below a lower limit value, with the following features:

    a) a device is provided which continuously detects the length of time (KZ) of a commutation phase roughly from the commutation at the beginning of this commutation phase to roughly to the commutation at the end of this commutation phase as a digital value;
    b) a device is provided for comparing this length of time (KZ) with a predetermined threshold value (S3);
    c) a device is provided which produces an alarm signal (ALARM) (S176) when this length of time (KZ) exceeds the threshold value (S3).

**15.** Motor according to claim 14, in which a programme loop with a predetermined length of time is run through a plurality of times in succession for roughly the length of time of a commutation phase and each pass is detected in a counter (KZ) in order to detect the length of time of a commutation phase.

**16.** Commutatorless direct-current motor according to claim 14 or 15, in which a counter (KZ) is provided for detecting the length of time of a commutation phase.

**17.** Commutatorless direct-current motor according to claim 16, in which the counter is part of a microprocessor or microcontroller (20) which serves for controlling the commutation of the motor.

**18.** Commutatorless direct-current motor according to claim 16 or 17, with a rotor the rotor magnet of which has trapezoidal magnetisation.

**19.** Use of a commutatorless direct-current motor according to one or more of claims 14 to 18 for driving a fan.


**Revendications**

**1.** Procédé pour surveiller un moteur à courant continu sans collecteur, présentant les caractéristiques suivantes :

    a) lors de l'excitation d'un enroulement défini du moteur, la durée (KZ) de la phase de commutation allant par exemple de la commutation au début de cette phase de commutation à par exemple la commutation à la fin de cette phase de commutation est saisie d'une façon continue sous forme de valeur numérique ;
    b) cette durée (KZ) est comparée avec une valeur seuil définie (S3) ;
    c) si cette durée (KZ) dépasse la valeur seuil (S3), un signal d'alarme (ALARM) est déclenché (S176), le cas échéant en tenant compte de paramètres supplémentaires.

**2.** Procédé selon la revendication 1, dans lequel une boucle de programme de durée définie s'exécute plusieurs fois successivement par exemple pendant la durée d'une phase de commutation et chaque exécution de boucle est saisie dans un compteur (KZ) afin de saisir d'une façon continue la durée de cette phase de commutation.

**3.** Procédé pour influencer la vitesse de rotation d'un moteur à courant continu sans collecteur, présentant les caractéristiques suivantes :

    a) lors de l'excitation d'un enroulement défini du moteur, la durée (KZ) de la phase de commutation allant par exemple de la commutation au début de cette phase de commutation à par exemple la commutation à la fin de cette phase de commutation est saisie d'une façon continue sous forme de valeur numérique ;

b) cette durée (KZ) est comparée avec une valeur seuil définie (S3) ;

c) si cette durée (KZ) dépasse la valeur seuil (S3), le moteur est mis hors tension (S228).

4. Procédé selon la revendication 3, dans lequel le moteur est mis hors tension pendant un intervalle de temps défini (S216 ; S230) au pas c)
et une remise sous tension du moteur est tentée à l'expiration de cet intervalle de temps défini.

5. Procédé selon la revendication 4, dans lequel un signal d'alarme (ALARM) est déclenché (S176) à l'expiration de l'intervalle de temps défini.

6. Procédé selon l'une des revendications 3 à 5, dans lequel la durée (KZ) des phases de commutation pour un ou plusieurs enroulements (31, 32) est saisie d'une façon continue et comparée chaque fois avec la valeur seuil (S3).

7. Procédé selon une ou plusieurs des revendications précédentes, dans lequel une boucle de programme de durée définie s'exécute plusieurs fois pendant une phase de commutation et chaque exécution de boucle est comptée dans un compteur de boucle (KZ).

8. Procédé selon la revendication 7, dans lequel les boucles de différentes phases de commutation ont différentes structures de programme.

9. Procédé selon la revendication 7 ou 8, dans lequel le compteur de boucle (KZ) commande au moins un processus au cours d'une phase de commutation, p. ex. établissement d'un courant (S 133), coupure d'un courant (S134) et/ou surveillance d'une vitesse de rotation minimum (S212).

10. Procédé selon une ou plusieurs des revendications 7 à 9, dans lequel la boucle de programme présente un algorithme de mesure (S137, 138, 139) pour la saisie d'une différence temporelle (Td, Td') correspondant à une déviation de réglage.

11. Procédé selon la revendication 10, dans lequel l'algorithme de mesure présente des pas (S139 ; S153) pour adapter un paramètre de réglage (I, P) à la différence temporelle (Td, Td') saisie.

12. Procédé selon la revendication 10 ou 11, dans lequel l'algorithme de mesure (S139 ; S153) est contenu sous la forme d'un branchement dans la boucle de programme, lequel n'est parcouru que pendant la durée de la différence temporelle (Td, Td').

13. Procédé selon la revendication 12, dans lequel la durée d'exécution d'une boucle de programme est au moins à peu près indépendante du fait que le branchement soit parcouru ou non.

14. Moteur à courant continu sans collecteur avec un dispositif pour surveiller si sa vitesse rotation devient inférieure, en fonctionnement, à une valeur seuil inférieure, présentant les caractéristiques suivantes :

a) il est prévu un dispositif qui saisit d'une façon continue, sous forme de valeur numérique, la durée (KZ) d'une phase de commutation allant par exemple de la commutation au début de cette phase de commutation à par exemple la commutation à la fin de cette phase de commutation ;
b) il est prévu un dispositif pour comparer cette durée (KZ) avec une valeur seuil définie (S3) ;
c) il est prévu un dispositif qui déclenche un signal d'alarme (ALARM) (S176) si cette durée (KZ) dépasse la valeur seuil (S3).

15. Moteur selon la revendication 14, dans lequel une boucle de programme de durée définie s'exécute plusieurs fois successivement par exemple pendant la durée d'une phase de commutation et chaque exécution est saisie dans un compteur (KZ) afin de saisir la durée d'une phase de commutation.

16. Moteur à courant continu sans collecteur selon la revendication 14 ou 15, dans lequel il est prévu un compteur (KZ) pour la saisie de la durée d'une phase de commutation.

17. Moteur à courant continu sans collecteur selon la revendication 16, dans lequel le compteur fait partie intégrante d'un microprocesseur ou microcontrôleur (20) qui sert à la commande de la commutation du moteur.

**18.** Moteur à courant continu sans collecteur selon la revendication 16 ou 17, avec un rotor dont l'aimant de rotor présente une magnétisation trapézoïdale.

**19.** Utilisation d'un moteur à courant continu sans collecteur selon une ou plusieurs des revendications 14 à 18 pour entraîner un ventilateur.

EP 0 895 345 B1

Fig. 1

Fig. 2

Fig. 3

Fig. 4

17 103 GS

| | | |
|---|---|---|
| 16 | GND | out 1 | 11 |
| 13 | ENTLAD | NGø | 14 |
| 3 | RESET | NG1 | 15 |
| 2 | OSC 2 | out2 | 10 |
| 1 | OSC 1 | SEN | 4 |
| 8 | VCC | ATS | 12 |
| 7 | KOMM | E/A | 5 |
| 6 | DIFF | ALARM | 9 |

Fig.5

Fig. 6

$n < n^*$

Fig. 7

$n = n^*$

24

Fig.8

Fig.9

Fig. 10

26

Fig. 11

a)

KOMM

$-T_d$

H

L

H

0°

180°

360°

$t$

b)

$U_{dif}$

L

$t$

D

Pl

$i_1$

D

Pl*

$i_2$

D

Pl*

$i_1$

c)

$t$

70

$t_1$

72

74

76

$t_2$

78

80

$t_3$

82

Berechnung von Pl

Berechnung des Stromeinsatzpunktes t1 aufgrund zuvor berechneten Pl-Wertes

Messung der Regelabweichung und simultane Veränderung der Werte für I und P, wenn Drehzahl zu niedrig.

Berechnung von neuem Pl*

Berechnung des Stromeinsatzpunktes t2 aufgrund von neuem Pl*

Berechnung von ALARM

Berechnung des Stromeinsatzpunktes t3 aufgrund des Wertes Pl*, der weiterverwendet wird.

Motor zu langsam

Fig. 12

EP 0 895 345 B1

KOMM

$H$

$L$

$180°$ | $360°$ | $180°$ a)

$t$

$H$

$180°$ +Td $u_{dif}$

$L$ b)

$t$

$D$ PI $i_2$ D PI* $i_1$ D PI* $i_2$

$t_1$ $t_2$ $t_3$

$t$ c)

85 | Td' | 87 | 89 | 92 | 94 | 96 | 98

| 85 | 87 | 89 | 92 | 94 | 96 | 98 |
|---|---|---|---|---|---|---|
| Be-rech-nung von PI | Berechnung des Strom-einsatzpunk-tes $t_1$ auf-grund zuvor berechneten PI-Wertes | Messung der Re-gelabweichung und simultane Veränderung der Werte für I und P, wenn Drehzahl zu hoch. | Be-rech-nung von neuem PI* | Berechnung des Stromeinsatz-punktes $t_2$ aufgrund des neuen Wertes PI* | Be-rech-nung von ALARM | Berechnung des Stromeinsatzpunk-tes $t_3$ aufgrund des Wertes PI*, der weiterverwendet wird. |

Motor zu schnell

Fig. 13

Fig. 14

EP 0 895 345 B1

Power - On Reset

Port - Abfragen
Dekodierung KZMIN, AVZ
SENSAB = L
PI = 0
$KZ_{alt}$ = 255
I = 0

PZ = 15
$U_{difalt}$ = H

~ S 130

Kommutierungswechsel    Ⓐ

$KZ'_{alt}$ = KZ
$KZ'_{alt}$ = $KZ_{alt}$ - D
KZ = 0
P = 0

~ S 131

**Fig. 15**

NEIN ← E/A = H? ~ S 132

JA

~ S 201

(KOMM = H) JA ← KOMM = H? → NEIN (KOMM = L)

S 202
NEIN ← $U_{difalt}$ = H? → JA

S 205
NEIN ← $U_{difalt}$ = H? → JA

S 203
REG = +1 ~ S 204     REG = -1

S 206
REG = -1 ~ S 207     REG = +1

Ⓑ

Ⓒ

B

(KOMM = H)

S 133

JA — KZ < PI ? — NEIN

NEIN — KZ < KZ'alt ? — S 134

JA

S 135
out 1 = L
out 2 = L

S 136
out 1 = L
out 2 = H

S 137
NEIN — $U_{dif}$ = L ?

JA

S 140
SENSAB = L
$U_{difalt}$ = H

S 138
NEIN — $U_{difalt}$ = L ?

JA

S 210
NEIN — REG = +1 ?

JA

S 139
$I = I + X$ (max 255)
$P = P + y$ (max 15)
ENTLAD = L
$U_{difalt}$ = L

**Fig. 16**

162
Berechnung
von ALARM

S 141
NEIN — I = 255 ?

JA

S 216
Warte 3 sec.

S 142
SENSAB = H

S 214
out 1 = L
out 2 = L

S 143
KZ = KZ + 1

S 212
KZ < S3 ? — NEIN

JA

S 144
JA — KOMM = H ?

NEIN

D

Fig.17

Fig. 18

163

Berechnung von PI

S164
SENSAB = H ?

JA

S165
PI = 0

NEIN

S166
P = REG · P
PI = I + 2P

S167
I > S1 ?

JA

NEIN

S168
I = R1

S169
I bleibt

S170
PI ≥ 0 ?

NEIN

JA

S171
PI = 0

S172
PI bleibt

S173
KZ > KZMIN ?
&
I > KZMIN ?

NEIN

JA

S174
(Min = 0)
PI = 2 · KZMIN − KZ

**Fig. 19**

A

**Fig. 20**

Fig. 21

Fig. 22

Fig. 23

*Fig. 24*

EP 0 895 345 B1

*Fig.25*